(19) **Europäisches Patentamt / European Patent Office / Office européen des brevets**

(11) **EP 1 374 465 B1**

(12) **FASCICULE DE BREVET EUROPEEN**

(45) Date de publication et mention
de la délivrance du brevet:
**25.11.2009 Bulletin 2009/48**

(51) Int Cl.:
***H04L 12/56*** *(2006.01)*

(21) Numéro de dépôt: **02714291.8**

(22) Date de dépôt: **08.03.2002**

(86) Numéro de dépôt international:
**PCT/FR2002/000843**

(87) Numéro de publication internationale:
**WO 2002/076002 (26.09.2002 Gazette 2002/39)**

(54) **COMMUTATEUR DE TRAMES D'INFORMATIONS DE TAILLE VARIABLE POUR RESEAUX SECURITAIRES EMBARQUES**

VERMITTLUNGSSTELLE FÜR DATENRAHMEN VARIABLER GROSSE IN SICHERHEITS BORDNETZEN

VARIABLE SIZED INFORMATION FRAME SWITCH FOR ON-BOARD SECURITY NETWORKS

(84) Etats contractants désignés:
**DE FR GB IT**

(30) Priorité: **16.03.2001 FR 0103625**

(43) Date de publication de la demande:
**02.01.2004 Bulletin 2004/01**

(73) Titulaire: **Thales**
**75008 Paris (FR)**

(72) Inventeurs:
• **LOGE, Alain,**
**Thales Intellectual Property**
**94117 Arcueil Cédex (FR)**

• **PITOT, Christian,**
**Thales Intellectual Property**
**94117 Arcueil Cédex (FR)**

(74) Mandataire: **Beylot, Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 299 473    EP-A- 0 715 436**
**US-A- 5 233 603**

**Description**

La présente invention est relative aux réseaux de transmission à commutation par paquets destinés à véhiculer des informations critiques pour la sécurité avec des exigences particulières en termes de garantie et de durée d'acheminement. De tels réseaux de transmission sécuritaires ont de nombreux domaines possibles d'application dont l'interconnexion des équipements de bord d'un aéronef pour l'échange de consignes et d'informations critiques.

Un réseau de transmission à commutation par paquets est généralement désigné par réseau ATM ou ethernet commuté, le sigle provenant de l'anglo-saxon "Asynchronous Transfer Mode". Il est constitué d'un ensemble de noeuds d'interconnexion dits "commutateurs ATM ou ethernet", réunis par des liaisons de transmission, câblées ou non, constituant un maillage de l'espace où sont réparties les entités ayant à communiquer entre elles.

Pour être transmise sur un réseau ATM ou ethernet, une information doit subir deux mises en forme successives. Elle doit tout d'abord être numérisée et mise sous la forme d'un ou plusieurs paquets de données binaires de message complétés, en préambule, par des données binaires de service renfermant diverses consignes utiles au routage au sein du réseau dont des identifiants des entités destinatrices des paquets, pour constituer des datagrammes manipulables par les commutateurs ATM ou ethernet. Puis ces datagrammes doivent eux-mêmes être mis sous la forme d'un signal de transmission électrique ou optique adapté aux caractéristiques physiques des liaisons de transmission interconnectant les commutateurs ATM ou ethernet.

Les transmissions ethernet ou ATM se différencient principalement entre elles par l'utilisation de paquets de taille variable (64 à 1518 octets) pour les réseaux ethernet, tandis que les transmissions ATM se caractérisent par une taille fixe. Dans ce qui suit on considère que la taille des paquets est quelconque ce qui permet l'application à des réseaux ATM ou ethernet.

Un example d'un commutateur de trames d'informations est connu de la demande de brevet EP-A- 0 299 473

La mise au premier plan de l'aspect sécuritaire conduit à adopter dans un réseau de commutation de paquets des mesures tendant à garantir au mieux, l'acheminement d'une information en un délai maximum, même en cas d'un fonctionnement dégradé par une panne.

Parmi ces mesures, certaines ont pour but d'éliminer les risques de perte ou de retard d'acheminement des informations par suite de congestion du réseau, d'autres ont pour but de faire en sorte que les informations ayant, malgré les précautions prises, perdu leur intégrité en cours d'acheminement soient rejetées pour ne pas encombrer des liaisons de transmission et accaparer inutilement du temps de traitement dans les commutateurs.

Les mesures en vue d'éliminer les risques de perte ou de retard d'acheminement des informations consistent principalement, à imposer au réseau d'être déterministe pour faciliter l'analyse, a priori, de son comportement en toutes circonstances et à le dimensionner de manière à supporter le trafic maximum possible, ce qui revient à garantir un débit minimum pour chaque flux d'informations acheminé au travers du réseau, depuis une entité expéditrice à l'attention d'une ou plusieurs entités destinataires, les dits flux étant appelés de façon plus concise, voies virtuelles.

Pour qu'un réseau de transmission soit déterministe, il faut que les chemins virtuels résultant des positions instantanées des commutateurs adoptées aux moments des passages des informations soient prédéfinis, invariants et uniquement fonction des entités expéditrices et destinataires.

Ces contraintes d'être déterministe et de garantie de débits minima sur les voies virtuelles du réseau reliant entités expéditrices et destinataires jouent sur le dimensionnement du réseau, c'est-à-dire sur le nombre et la disposition des commutateurs et des liaisons de transmission assurant le maillage des commutateurs mais également sur les performances exigées des commutateurs et des liaisons de transmission. Elles se traduisent, pour chaque liaison de transmission, par un débit minimum imposé correspondant au débit maximum prévisible compte tenu du fait qu'elles peuvent être empruntées par plusieurs voies virtuelles et, pour chaque commutateur, par l'exigence de pouvoir aiguiller correctement les trafics de données arrivant sur ses ports d'entrée-sortie lorsque les liaisons de transmission raccordées à ses ports d'entrée-sortie sont toutes à leurs débits maxima prévisibles.

Les mesures en vue de rejeter les informations acheminées par le réseau dès qu'elles ont perdu leur intégrité consistent à prévoir, dans les datagrammes, des informations de contrôle d'intégrité dont la concordance avec le contenu apparent du datagramme est vérifiée avant toutes opérations d'aiguillage et de retransmission au sein d'un commutateur.

Un commutateur effectue principalement :

- une détection et une démodulation, au niveau de chacun de ses ports d'entrée-sortie, des signaux de transmission lui parvenant par les liaisons de transmission auxquelles il est directement raccordé permettant de récupérer les datagrammes,
- une mémorisation temporaire des trafics d'informations reçus par tous ses ports d'entrée-sortie en attente de l'exécution des opérations de routage des datagrammes en cours de réception vers un ou plusieurs ports de sortie du commutateur,
- une analyse des données binaires de service placées en tête de chaque datagramme pour en déduire un profil de diffusion déterminant le ou les ports de sortie vers lesquels le datagramme considéré doit être aiguillé,

- l'exécution, dès que possible, du profil de diffusion consistant en une récupération, dans la mémoire tampon, du trafic acheminant le datagramme considéré et sa présentation sur les ports de sortie voulus, et
- la remodulation des datagrammes au niveau des ports de sortie pour leur donner la forme d'un signal de transmission adapté à leur acheminement sur les liaisons de transmission connectées aux ports de sortie.

Pour la mémorisation temporaire des différents trafics de données parvenant en réception aux ports d'entrée-sortie d'un commutateur, on a besoin de mémoires circulantes en nombre égal à celui des trafics de données entrants, d'une capacité adaptée aux délais recherchés de mémorisation et d'une rapidité adaptée aux débits de ces trafics de données entrants. Ces mémoires circulantes, qui manipulent les trafics entrants alors qu'ils sont sous forme numérique, sont réalisées à partir d'ensembles de bancs de registres, chaque ensemble ayant ses bancs de registres balayés cycliquement en écriture, selon une loi d'adressage invariante, à un rythme suffisant pour absorber le débit du trafic considéré. En lecture, chaque port de sortie se voit alloué selon un rythme suffisant pour restituer le débit de trafic considéré, la possibilité d'accéder à l'ensemble des mémoires circulantes. Ces dernières peuvent être localisées au niveau des ports d'entrée-sortie ou rassemblées au sein d'un dispositif central de mémorisation dit mémoire tampon centrale.

La présente invention concerne plus précisément un commutateur de paquets à mémoire tampon centrale.

L'exigence d'une garantie d'acheminement au travers d'un commutateur, de l'ensemble des trafics lui parvenant sur tous ses ports d'entrée-sortie à leurs débits maxima autorisés se traduit sur sa mémoire tampon centrale, par la nécessité de tolérer, en entrée et en sortie, un débit égal à la somme de tous ces débits maxima, ce qui peut conduire à un débit de valeur très élevée. Ainsi, un commutateur ayant 15 ports d'entrée-sortie avec des débits maxima de 100 Mbits/s doit avoir une mémoire tampon acceptant un débit de 1,5 Gbits/s en écriture et en lecture.

Ce débit très élevé exigé pour la mémoire tampon centrale pose des problèmes au niveau de la gestion de cette dernière, de sa consommation d'énergie et des parasites radioélectriques engendrés par les commutations inhérentes à son adressage et aux opérations de lecture et d'écritures de données.

Par ailleurs, il est intéressant d'utiliser les durées de transit des datagrammes dans la mémoire tampon comme critère d'intégrité. De plus, bien que les datagrammes trop anciens dans la mémoire tampon se trouvent naturellement écrasés par des datagrammes plus récents arrivés par le même port d'entrée, il est utile de connaître les durées de traitement des datagrammes pour détecter rapidement la présence de problèmes de fonctionnement au sein d'un commutateur et pouvoir prendre les dispositions nécessaires pour isoler au plus vite ce commutateur. La solution habituelle, qui consiste à dater les datagrammes en transit dans un commutateur, en fonction des instants de leurs réceptions, a l'inconvénient d'augmenter la quantité de données à mémoriser dans la mémoire tampon.

La présente invention a pour but un commutateur de paquets avec une mémoire tampon centrale pour le stockage momentané des trafics d'informations lui parvenant par ses ports d'entrée, qui soit organisée et gérée de manière à maximiser la somme des débits binaires acceptables au niveau des ports d'entrée et de sortie du commutateur et à minimiser sa consommation d'énergie et les perturbations électromagnétiques engendrées par les commutations occasionnées par son adressage et les opérations en écriture et en lecture.

Elle a également pour but un commutateur de paquets avec une mémoire tampon centrale pour le stockage momentané des trafics d'informations lui parvenant par ses ports d'entrée, qui soit gérée de manière à donner une mesure implicite du temps de latence subit par chaque datagramme contenu dans les trafics d'informations qu'elle voit passer.

Elle a pour objet un commutateur de paquets avec plusieurs ports d'entrée et plusieurs ports de sortie assurant les accès au commutateur, de trafics de données entrants et sortants empruntant des liaisons physiques de transmission à l'extérieur du commutateur et acheminant des informations renfermant des datagrammes constitués de données binaires de message et de données binaires de service contenant des consignes de routage, chaque port d'entrée, respectivement de sortie, contrôlant les accès au commutateur d'un trafic de données entrant, respectivement d'un trafic de données sortant et chaque liaison physique ayant un débit maximum imposé à la réception comme à l'émission, ledit commutateur comportant :

au niveau de chacun de ses ports d'entrée :

- un circuit démodulateur assurant la démodulation permettant le passage des signaux de transmission véhiculés par les liaisons de transmission qui leurs sont raccordées, aux datagrammes qu'ils contiennent, et
- un circuit d'extraction des données binaires de service contenues dans les datagrammes reçus,

au niveau de chacun de ses ports de sortie :

- un circuit modulateur assurant la modulation permettant le passage des datagrammes aux signaux de transmission véhiculés par les liaisons de transmission qui leur sont raccordées, et

- un circuit de gestion d'émission exécutant des consignes d'aiguillage concernant les datagrammes en transit, reçus par le commutateur sur des ports d'entrée, et

à un niveau central,

- une mémoire tampon avec un ensemble de bancs de registres mémoire adressables en écriture et en lecture pour stocker temporairement les trafics de données entrant par les ports d'entrée, en attente d'aiguillage des datagrammes qu'ils contiennent pour réexpédition vers un ou plusieurs ports de sortie, et avec des bus d'adressage, de données et de contrôle permettant la sélection en écriture ou en lecture de chacun de ses bancs de registres, le nombre des bancs de registres étant au moins égal à celui des ports d'entrée et suffisant pour stocker les trafics de données reçus sur chaque port d'entrée sur une durée compatible avec un temps maximum alloué au commutateur pour aiguiller les datagrammes,
- un séquenceur rythmé par une horloge, gérant les bus d'adresses, de données et de contrôle lecture-écriture de la mémoire tampon, et les accès des circuits de démodulation et de gestion d'émission à la mémoire tampon, cette gestion consistant à :

  - partager les bancs de registres de la mémoire tampon en autant de groupes distincts que de ports d'entrée,
  - balayer, en écriture, les bancs de registres de chaque groupe d'une manière cyclique selon une loi de balayage invariante,
  - accorder à chaque port d'entrée un accès exclusif en écriture à un seul groupe de bancs de registres qui lui est affecté en propre, selon une périodicité compatible avec le débit maximum du trafic de données entrant dans le commutateur par le port d'entrée considéré,
  - et accorder à tous les ports de sortie un accès général en lecture à tous les groupes de bancs de registres avec un balayage de leurs bancs de registres partant d'un banc de registres de départ sélectionnable et respectant l'ordre du balayage en écriture, selon une périodicité compatible avec le débit binaire maximum du trafic de données sortant par le port d'entrée-sortie considéré, et

- un automate de routage analysant les données binaires de service associées aux datagrammes acheminés par les trafics de données en transit dans le commutateur, stockés temporairement dans la mémoire tampon, pour extraire des consignes de routage, un profil de diffusion déterminant les ports de sortie de réexpédition puis des consignes de réexpédition à faire exécuter par les circuits de gestion d'émission des ports de sortie identifiés par le profil de diffusion,

et étant **caractérisé en ce que** ledit séquenceur assure la gestion des accès des ports d'entrée et des ports de sortie à la mémoire tampon :

- en découpant le temps mesuré par l'horloge en une suite répétitive de fentes temporelles dans lesquelles sont répartis, de manière invariante, les accès en écriture et en lecture des ports d'entrée et des ports de sortie aux groupes de bancs de registres de la mémoire tampon, chaque port d'entrée ayant au moins un accès en écriture et chaque port de sortie un accès en lecture à un banc de registres de la mémoire tampon au cours de la suite répétitive de fentes temporelles, et
- en utilisant un système d'adressage des bancs de registres de la mémoire tampon reprenant dans une première partie de l'adresse individuelle d'un banc de registre au sein de la mémoire tampon, l'adresse du groupe auquel il appartient, cette partie d'adresse identifiant également le port d'entrée possédant l'accès exclusif en écriture dans le banc de registre considéré, et, dans une deuxième partie de l'adresse individuelle d'un banc de registres sa position relative par rapport aux bancs de registres de son groupe d'appartenance au sein d'un balayage en écriture de ce groupe.

Du fait de la gestion faite par le séquenceur des accès des ports d'entrée et des ports de sortie du commutateur à sa mémoire tampon, les adresses des bancs de registres de la mémoire tampon permettent de déterminer à la fois le port d'entrée donc le trafic de données entrant d'où provient le mot de données stocké par un banc de registres et la date d'inscription de ce mot puisque les accès en inscription des ports d'entrée à la mémoire ainsi que les bancs de registres adressés au cours de ces accès en inscription ne dépendent que de la variable temps délivrée par l'horloge. La lecture d'un banc de registres de la mémoire tampon donne alors une mesure implicite du délai de stockage du mot de données concerné et donc de son temps de latence au sein du commutateur, temps de latence qui est également celui du datagramme auquel il appartient.

Avantageusement, la mémoire tampon est organisée en plusieurs modules fonctionnant en parallèle et ayant chacun leurs bancs de registres répartis, entre les différents groupes affectés en écriture aux différents ports d'entrée.

Avantageusement, la mémoire tampon est organisée en plusieurs modules de même capacité fonctionnant en parallèle et ayant leurs bancs de registres répartis entre les différents groupes affectés en écriture aux différents ports d'entrée en suivant une même loi de répartition.

Avantageusement, la mémoire tampon est organisée en deux modules de capacités analogues fonctionnant en parallèle l'un en écriture, l'autre en lecture et échangeant périodiquement les rôles d'écriture et de lecture.

Avantageusement, la mémoire tampon est organisée en trois modules de capacités analogues fonctionnant en parallèle en écriture et en lecture, les actions d'écriture et de lecture dans chacun des trois modules étant déphasées entre elles du tiers de leur période.

Avantageusement, la mémoire tampon est organisée en quatre modules de capacités analogues fonctionnant en parallèle en écriture et en lecture, les actions d'écriture et de lecture dans chacun des quatre modules étant déphasées entre elles du quart de leur période.

Avantageusement, les accès de même nature, écriture ou lecture, de la mémoire tampon initiés par le séquenceur sont regroupés à plusieurs au cours de la suite répétitive de fentes temporelles de manière à minimiser la fréquence des transitions lecture-écriture et écriture-lecture qui sont génératrices de temps d'accommodement pendant lesquels la mémoire tampon n'est pas opérationnelle.

Avantageusement, les accès en écriture correspondant aux fentes temporelles regroupées de manière à minimiser la fréquence des transitions lecture-écriture et écriture-lecture, se font à des adresses ne différant entre elles que par leur première partie codant le numéro de port d'entrée, leur deuxième partie liée à la date d'inscription restant commune à l'ensemble des fentes temporelles regroupées. Il en résulte une minimisation du nombre de commutations à haute fréquence sur le bus d'adresse au cours des phases d'écritures et par conséquent une minimisation de la consommation et du bruit généré.

Avantageusement lorsqu'un port d'entrée est inactif, il utilise l'accès en écriture dans la fente temporelle qui lui est associée pour inscrire un mot de données raccourci avec une valeur spécifique signalant une absence de donnée valide. Ce mot de données raccourci n'utilise que peu d'éléments du banc de registres adressé tandis que les autres prennent les valeurs correspondant au maintien de la données antérieurement sur le bus de données. De ce fait le nombre des commutations à haute fréquence sur les bus de donnée au cours des phases d'écriture est minimisé. Il en résulte par conséquent une minimisation de la consommation et du bruit généré.

Avantageusement, lorsqu'un port de sortie est inactif l'accès en lecture ainsi inutilisé dans la fente temporelle qui lui est associée, s'effectue à une adresse correspondant à la dernière lecture utile. De ce fait le nombre des commutations à haute fréquence sur les bus d'adresse et de donnée au cours des phases de lecture est minimisé. Il en résulte par conséquent une minimisation de la consommation et du bruit généré. Ces précautions sont particulièrement efficaces pour des commutateurs de paquets fonctionnant dans un contexte de réseau déterministe pour lequel la charge moyenne de chaque lien (liaison physique de transmission) est faible.

Avantageusement, des registres sont réservés dans chaque bancs de la mémoire tampon pour au moins un drapeau de présence ou d'absence de datagramme. Un port d'entrée profite alors des accès périodiques en écriture dans le groupe de bancs de registres qui lui est alloués par le séquenceur pour, soit inscrire un datagramme en cours de réception et activer dans chaque banc de registre en cours d'inscription, le drapeau de présence de datagramme, soit, en l'absence de réception de datagramme, pour uniquement désactiver le drapeau de présence de datagramme dans chaque banc de registres en cours d'inscription. Le drapeau de présence de datagramme permet de sécuriser le fonctionnement du commutateur en s'assurant que ses circuits de gestion d'émission manipulent uniquement des bancs de registres de la mémoire tampon centrale contenant effectivement des données de datagramme.

Avantageusement, l'automate de routage bénéficie d'accès en écriture et en lecture dans la mémoire tampon centrale pour stocker, dans des bancs de registres inutilisés par les ports d'entrée et pour chaque datagramme mémorisé ou en cours de mémorisation, une étiquette d'encapsulation renfermant son profil de diffusion.

Avantageusement, l'automate de routage bénéficie d'accès en écriture et en lecture dans la mémoire tampon centrale pour stocker, dans des bancs de registres inutilisés par les ports d'entrée et pour chaque datagramme mémorisé ou en cours de mémorisation, une étiquette d'encapsulation renfermant son profil de diffusion et une indication de sa longueur.

Avantageusement, les datagrammes acheminés à la suite sur une même liaison physique sont séparés par un intervalle de temps minimum et la périodicité d'affectation d'un accès en écriture au port d'entrée où aboutit la liaison physique est inférieure à la durée de cet intervalle de temps minimum de séparation, ce qui garantit la présence dans le groupe de bancs de registres de la mémoire tampon centrale affecté en écriture à un port d'entrée, d'au moins un banc de registres inutilisé à la séparation entre les données mémorisées de deux datagrammes successifs.

Avantageusement, les datagrammes acheminés à la suite sur une même liaison physique sont séparés par un intervalle de temps minimum et la périodicité d'affectation d'un accès en écriture au port d'entrée où aboutit la liaison physique est inférieure à la durée de cet intervalle de temps minimum de séparation, ce qui garantit la présence dans le groupe de bancs de registres de la mémoire tampon centrale affecté en écriture à un port d'entrée, d'au moins un banc de registres inutilisé à la séparation entre les données mémorisées deux datagrammes successifs, qui est utilisé pour stocker une étiquette d'encapsulation renfermant le profil de diffusion extrait par l'automate de routage, des informations de service incluses dans le datagramme, cette étiquette d'encapsulation permettant de sécuriser le fonctionnement du commutateur en s'assurant que les circuits de gestion d'émission des ports de sortie exécutent des opérations en accord avec le profil de diffusion associé au datagramme.

D'autres caractéristiques et avantages de l'invention ressortiront de la description ci-après d'un mode de réalisation donné à titre d'exemple, cette description sera faite en regard du dessin dans lequel :

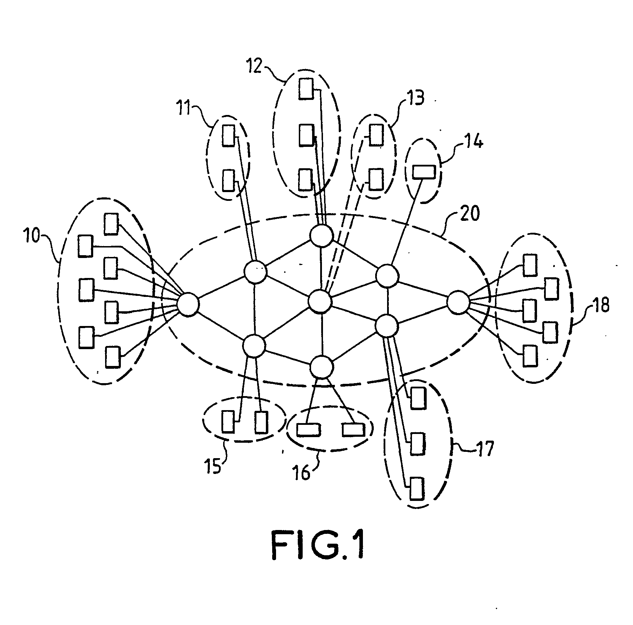

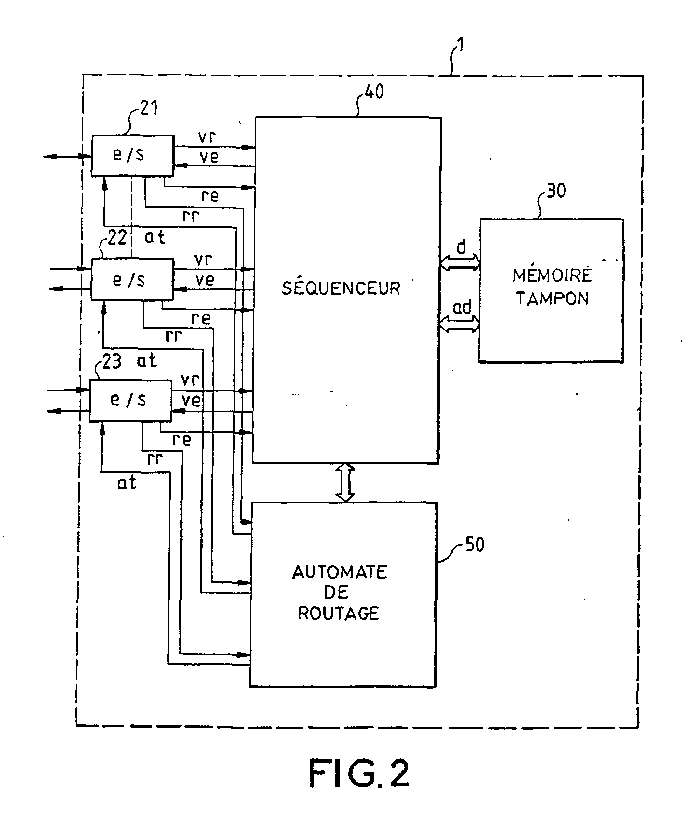

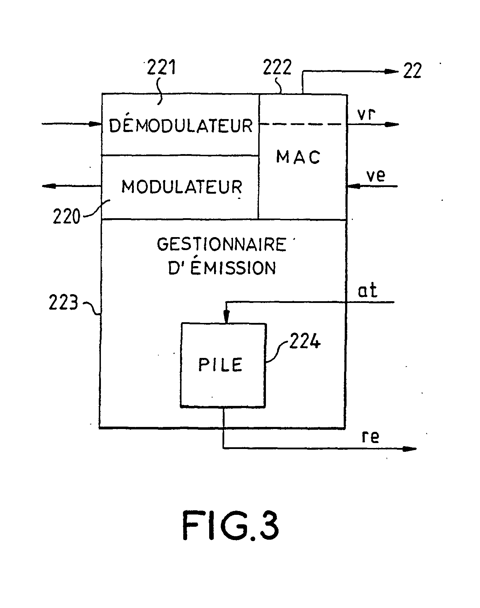

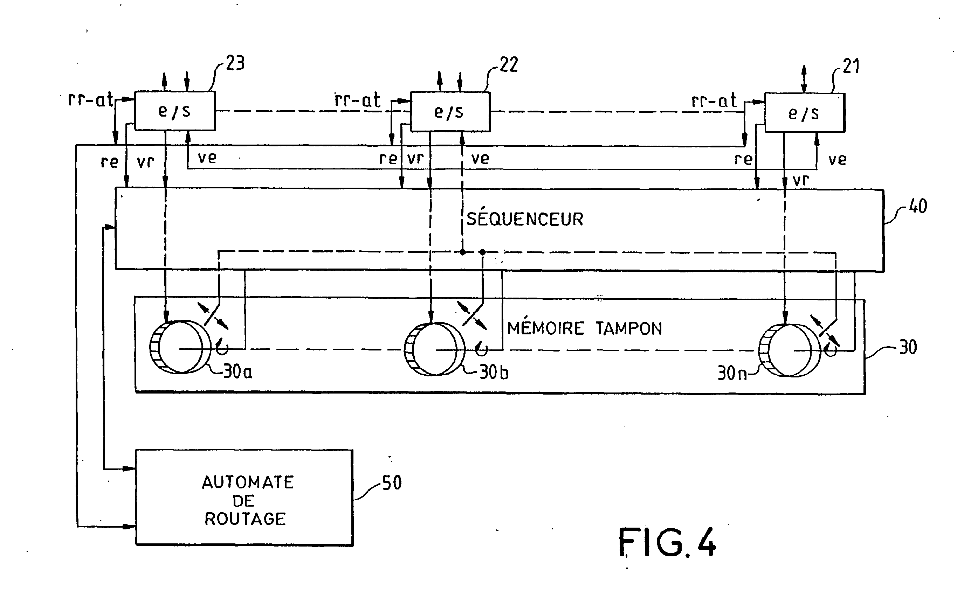

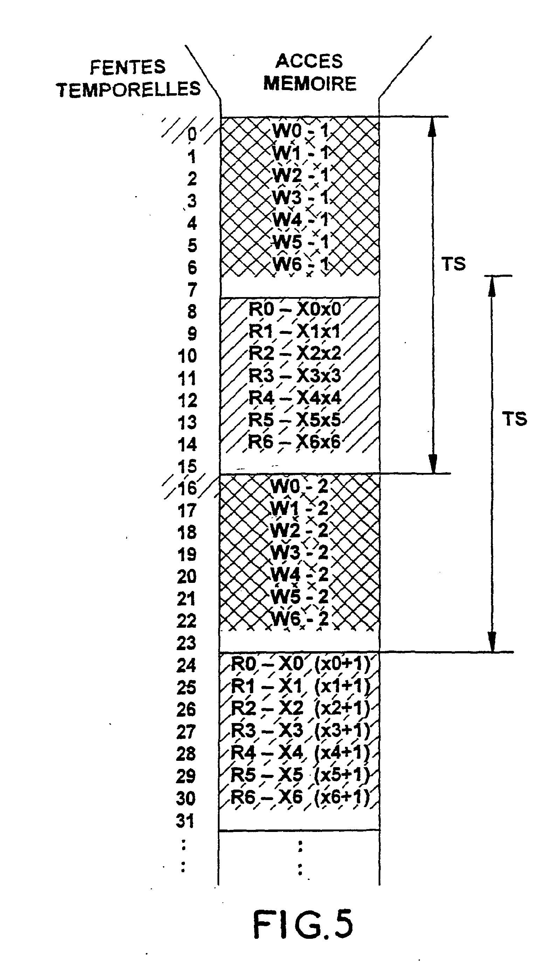

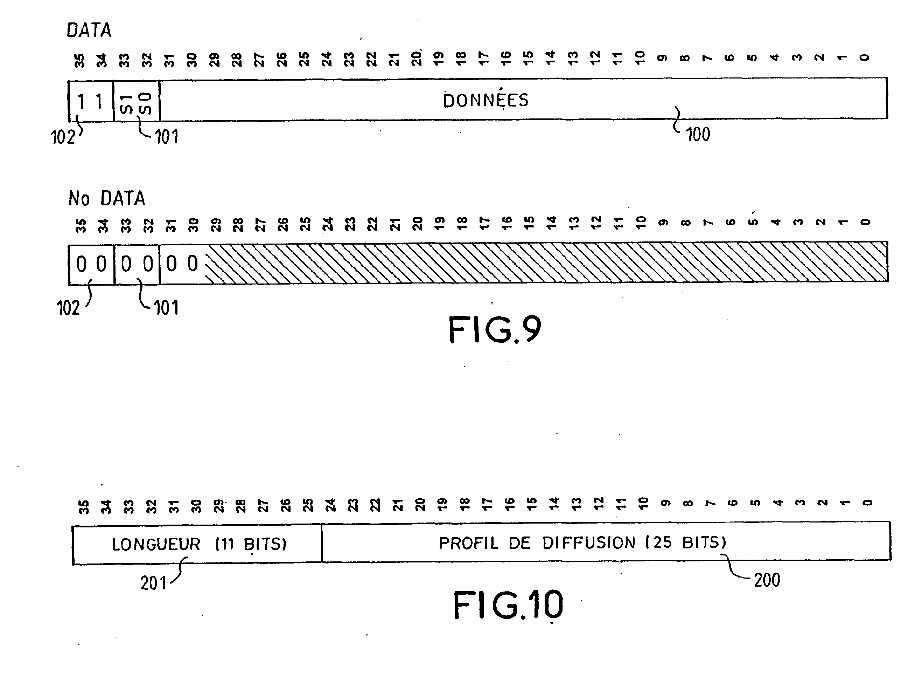

- une figure 1 représente un exemple de topologie de réseau de transmission par paquets,
- une figure 2 représente une architecture de commutateur de paquets à mémoire tampon centralisée,
- une figure 3 détaille les parties principales d'un port d'entrée-sortie de commutateur,
- une figure 4 reprend, sous une forme plus fonctionnelle l'architecture de commutateur de paquets montrée à la figure 2,
- des figures 5 à 8 illustrent différents exemples de séquencement pour les accès aux trafics de données entrants et sortants dans la mémoire tampon centralisée d'un commutateur de paquets, dans le cadre de mémoires à un, deux, trois ou quatre modules fonctionnant en parallèle,
- une figure 9 illustre des formats pour les mots de données stockés dans les bancs de registres de la mémoire tampon centrale selon que ces mots appartiennent ou non à des datagrammes constituant les messages utiles acheminés par le réseau, et
- une figure 10 illustre un format pour une étiquette d'encapsulation ajoutée à un datagramme lors de son passage dans un commutateur de paquets et utilisée à des fins de contrôle de son routage au sein de ce commutateur.

La figure 1 montre différents équipements 10 à 18 qui communiquent entre eux par l'intermédiaire d'un réseau de transmission à commutation par paquets 20. Les ensembles d'équipements 10 à 18 sont d'importances inégales et géographiquement dispersés sur une zone couverte par le réseau de transmission à commutation par paquets 20 qui est schématisé par un maillage de noeuds d'interconnexion ou commutateurs de paquets représentés par des cercles, et de liaisons physiques de transmission représentées par des segments de droite joignant les noeuds d'interconnexion entre eux. Chaque équipement représenté par un rectangle, est raccordé au réseau de transmission à commutation par paquets, au niveau d'un ou plusieurs noeuds d'interconnexion placés à proximité, par l'intermédiaire d'un terminal spécialisé non représenté et d'une ou plusieurs liaisons physiques de transmission.

Pour leur manipulation au travers d'un réseau de transmission à commutation par paquets, les messages échangés par les équipements subissent une double mise en forme : d'une part, une numérisation leur donnant l'aspect d'une suite de données binaires et une mise en forme en datagrammes adaptés aux traitements de routage que leur font subir des circuits logiques combinatoires et/ou séquentiels au sein de chaque commutateur de paquets traversé et, d'autre part, une mise en forme des datagrammes en signaux de transmission électriques ou optiques pour leurs acheminements par les liaisons physiques d'interconnexion.

Les datagrammes sont constitués d'une suite de données binaires de message précédée d'une suite de données binaires de service renfermant des informations utiles à leurs routages au sein des commutateurs de paquets traversés, Ils respectent un format d'organisation ou protocole particulier adapté aux caractéristiques des circuits logiques combinatoires et/ou séquentiels effectuant les routages au sein des commutateurs de paquets.

Les signaux électriques ou optiques utilisés pour acheminer les datagrammes sur les liaisons physiques de transmission d'interconnexion reliant les commutateurs de paquets entre eux et aux équipements, sont adaptés aux caractéristiques physiques des liaisons utilisées.

Aux extrémités des liaisons de transmission, que ce soit au niveau des terminaux raccordant les équipements au réseau ou au niveau des ports d'entrée-sortie des noeuds d'interconnexion du réseau constitués par les commutateurs de paquets, on trouve des circuits de modulation et de démodulation assurant la transformation d'un signal de transmission reçu par une liaison physique de transmission en son datagramme correspondant et inversement la transformation d'un datagramme manipulé au niveau d'un terminal d'équipement ou d'un commutateur de paquets en un signal de transmission adapté à un acheminement par les liaisons physiques de transmission du réseau. Ces circuits de modulation et de démodulation ne seront pas détaillés car ils ne font pas partie de l'invention. Dans l'exemple décrit, ils sont supposés adaptés à des signaux de transmission asynchrones qui se propagent les uns à la suite des autres sur les liaisons physiques reliant les commutateurs de paquets et qui sont constitués chacun d'une modulation de phase d'une porteuse temporaire précédée en préambule d'un bout de porteuse non modulée destiné à faciliter la récupération de porteuse lors de la démodulation.

Un datagramme reçu et démodulé au niveau d'un port d'entrée-sortie d'un commutateur de paquets doit être aiguillé au sein de ce commutateur de paquets vers un ou plusieurs autres ports d'entrée-sortie pour être réémis sur une ou plusieurs liaisons physiques de transmission directement raccordées à ce commutateur de paquets afin de se rapprocher de sa ou ses destinations. Cette opération dite de routage, qui est la tâche essentielle d'un commutateur de paquets, peut nécessiter un certain délai fonction des encombrements des ports d'entrée-sortie de réémission. En effet, plusieurs datagram-

mes peuvent être reçus simultaném ent par des ports d'entrée-sortie différents et devoir être aiguillés, pour leurs réémissions, sur un même port d'entrée-sortie, ce qui provoque un embouteillage imposant la gestion d'une file d'attente.

La possibilité d'un délai de routage au sein d'un commutateur de paquets implique la nécessité de prévoir dans chaque commutateur de paquets une mémorisation des trafics de données entrants acheminant les datagrammes, sur une durée supérieure au délai de routage maximum prévisible au sein du commutateur de paquets considéré. Cette mémorisation temporaire de chaque trafic de données entrant dans un noeud d'interconnexion se fait à l'aide de mémoires circulantes affectées individuellement, à chaque trafic. Une mémoire circulante est formée d'un groupe de bancs de registres qui sont balayés cycliquement en écriture et en lecture dans le même ordre de succession, à une cadence suffisante pour supporter le débit maximum admis pour le trafic de données à mémoriser et qui sont en nombre suffisant pour assurer une mémorisation du trafic entrant considéré sur le délai voulu. Les différents groupes de bancs de registres affectés à la mémorisation des trafics de données entrants dans un commutateur de paquets peuvent être soit délocalisés et répartis au niveau des ports d'entrée-sortie du commutateur de paquets, soit centralisés et réunis au sein d'une mémoire tampon centrale. La centralisation des groupes de bancs de registres assurant la mémorisation temporaire des trafics entrants a l'avantage, dans un réseau sécuritaire, de permettre une centralisation et donc une simplification des contrôles de bon fonctionnement d'un commutateur de paquets.

La figure 2 illustre une architecture possible pour un commutateur 1 de réseau à commutation par paquets.

Le commutateur de paquets 1 communique avec d'autres commutateurs de paquets du réseau ou avec des équipements raccordés au réseau par des liaisons physiques de transmission mono ou bidirectionnelles. Son raccordement à une liaison physique bidirectionnelle de transmission ou à deux liaisons physiques monodirectionnelles de transmission utilisées l'une en réception et l'autre en émission, se fait par l'intermédiaire d'un port d'entrée-sortie e/s dédié. Sur la figure 2 trois ports d'entrée-sortie e/s 21, 22, 23 sont représentés mais le nombre de ports d'entrée-sortie n'est pas limité et correspond au nombre de raccordements prévus pour le commutateur de paquets considéré, un port d'entrée-sortie assurant l'interface entre une liaison physique de transmission bidirectionnelle ou deux liaisons physiques de transmission monodirectionnelles utilisées l'une à l'émission et l'autre à la réception.

Dans l'exemple représenté, le port d'entrée-sortie 21 assure l'interface avec une liaison physique de transmission bidirectionnelle et les ports d'entrée-sortie 22 et 23 l'interface avec deux liaisons physiques de transmission monodirectionnelles utilisées l'une à la réception et l'autre à l'émission. Assurer l'interface consiste à effectuer les tâches de modulation et de démodulation et une tâche de gestion de file d'attente à l'émission. La tâche de modulation consiste à mettre les datagrammes à émettre sous la forme d'un signal de transmission aux caractéristiques physiques adaptées à celles de la liaison utilisée à l'émission aboutissant sur le port d'entrée-sortie concerné. La tâche de démodulation consiste à extraire les datagrammes contenus dans les signaux de transmission reçus de la liaison physique de transmission utilisée à la réception aboutissant sur le port d'entrée-sortie considéré. La tâche de gestion de file d'attente consiste à mettre en file, les uns derrière les autres les datagrammes à émettre lorsque les ordres d'émission de ces derniers parviennent simultanément au port d'entrée-sortie ou à une cadence trop rapide eu égard au débit de la liaison physique de transmission utilisée à l'émission.

Un port d'entrée-sortie est relié, aux circuits internes de traitement du commutateur qu'il équipe, par une voie de réception de données, une voie d'émission de données et plusieurs ports de contrôle. Par la voie de réception de données vr il délivre le trafic entrant de données binaires parvenant au commutateur par la liaison physique de transmission qu'il contrôle. La voie d'émission de données ve lui permet de recevoir les datagrammes qu'il doit émettre et qui proviennent d'autres circuits internes du commutateur. Les ports de contrôle dont un port de requête de routage rr, un port d'attribution de datagrammes at et un port de requête de datagrammes à émettre re servent à la gestion de sa file d'attente.

La figure 3 détaille la constitution d'un port d'entrée-sortie, par exemple le port d'entrée-sortie 22. Celui-ci comporte des circuits modulateur démodulateur 220, 221 associés à un circuit MAC 222 et à un circuit gestionnaire d'émission 223 pourvu d'une pile de gestion de file d'attente 224.

Les circuits modulateur démodulateur 220, 221 associés au circuit MAC (Medium Access Control) assurent dans les deux sens, l'interface entre les datagrammes circulant à l'intérieur du commutateur et les signaux de transmission qui leur correspondent sur les liaisons physiques de transmission raccordées au port d'entrée-sortie considéré. Le modulateur 220 et le démodulateur 221 s'occupent des tâches de la couche physique, c'est-à-dire de l'inclusion, des données binaires manipulées dans le commutateur, dans un signal de transmission apte à être émis en dehors du commutateur, sur une liaison physique de transmission et de l'extraction des données binaires contenues dans les signaux de transmission reçus par une liaison de transmission. Le circuit MAC 222 accumule les données binaires fournies par le démodulateur 221 en mots binaires dont la longueur correspond à la capacité de traitement en une opération des circuits internes de traitement numérique du commutateur. Il détecte le début de réception d'un datagramme par analyse de son entête réservée aux données binaires de service du réseau et émet, sur le port de contrôle rr, des requêtes de routage de datagrammes accompagnées d'informations de service réseau extraites du datagramme considéré permettant de déterminer le profil de routage du datagramme. Il peut également réaliser un contrôle d'intégrité de chaque datagramme reçu lorsque ceux-ci renferment un code de contrôle d'intégrité, par exemple un code CRC (Cyclic Redondant Code).

Le circuit gestionnaire d'émission 223 reçoit, sur le port de contrôle at, des attributions de datagrammes consistant chacune en une identification d'un datagramme à émettre disponible au sein du commutateur. Il place ces attributions de datagrammes dans une pile de gestion de file d'attente 224, par exemple de type "First IN First Out", et transfère en requête d'émission sur le port de contrôle re, l'attribution de datagramme la plus ancienne figurant dans la pile de gestion de file d'attente 224 pour que les données correspondant au datagramme visé soit appliquée à la voie émission ve du port d'entrée-sortie.

Outre ses ports d'entrée-sortie 21, 22, 23, le commutateur de paquets 1 représenté à la figure 2 comporte : un automate de routage 30, une mémoire tampon 40 utilisée pour stocker sur un certain délai les trafics de données arrivant par les liaisons physiques de transmission qui lui sont raccordées et un séquenceur 50 gérant la mémoire tampon 30 et les accès à cette dernière par les différents ports d'entrée-sortie 21, 22, 23 et l'automate de routage 50.

L'automate de routage 50 est un circuit combinatoire et/ou séquentiel, par exemple à microprocesseur, qui traite les requêtes de routage émises par les différents ports d'entrée-sortie 21, 22, 23 pour en extraire les profils de routage associés à chaque datagramme en cours de réception par le noeud d'interconnexion et engendrer, à partir de ces profils de routage, des consignes d'attribution de datagramme à destination des ports d'entrée-sortie devant les réémettre. Les requêtes de routage, qui peuvent se présenter simultanément en provenance de plusieurs ports d'entrée-sortie différents, sont traitées successivement par l'automate de routage 30 qui soit gère une file d'attente, soit balaye régulièrement, selon un ordre déterminé, les ports de contrôle rr des différents ports d'entrée-sortie du noeud d'interconnexion.

La mémoire tampon 30 est un rassemblement de mémoires circulantes dont la présence est imposée par l'obligation de gérer des files d'attentes au niveau des ports d'entrée-sortie pour la réémission des datagrammes et, dans une moindre mesure, par les temps de traitement des requêtes de routage. Elle est constituée d'un ensemble de bancs de registres de longueurs égales à celle des mots binaires fournis par les ports d'entrée-sortie 21, 22, 23, longueur qui est choisie en fonction de la capacité de traitement en une opération, des circuits numériques utilisés dans le commutateur de paquets.

Comme représenté à la figure 4, l'ensemble de bancs de registres de la mémoire tampon 30 est partagé en autant de groupes séparés 30a,..., 30b,..., 30n qu'il y a de ports d'entrée-sortie 21, 22, 23, balayés en écriture de manière cyclique selon un ordre invariant. Chaque groupe 30a, 30b,..., 30n de bancs de registres est réservé en écriture au trafic de données binaires reçues par un port d'entrée-sortie déterminé 21, respectivement 22, 23 de manière que tous les trafics de données binaires reçus par l'ensemble des ports d'entrée-sortie aient individuellement, un groupe de bancs de registres affecté en propre pour y être enregistrer de manière temporaire. Chaque groupe 30a, 30b, 30n a ses bancs de registres balayés cycliquement en écriture à une cadence suffisante pour supporter le débit binaire du trafic de données auquel il est affecté. Ainsi, on retrouve, à tout instant, dans la mémoire tampon 40, les enregistrements fidèles des trafics de données binaires reçus par le commutateur de paquets sur une durée qui correspond au cycle de balayage en écriture de ses groupes de bancs de registres et qui peut être facilement ajustée en jouant sur le nombre de bancs de registres par groupe.

Chaque groupe de bancs de registres de la mémoire tampon 40 est balayé en lecture selon des cycles suivant le même ordre que les cycles d'écriture mais pouvant être initiés à partir de l'un quelconque de ses bancs de registres par tous les ports d'entrée-sortie puisque ceux-ci peuvent se voir attribuer pour réémission tout datagramme en cours de réception.

Un port d'entrée-sortie identifie, dans ses requêtes de routage, le datagramme concerné, par l'adresse d'enregistrement de son mot de début dans le groupe de bancs de registres de la mémoire tampon 40 qui est affecté au trafic de données par lequel il parvient au commutateur de paquets. Cette adresse est reprise par l'automate de routage 30 dans ses consignes d'attribution de datagramme à destination des autres ports d'entrée-sortie, afin de permettre aux circuits gestionnaires d'émission des ports d'entrée-sortie concernés de récupérer les données binaires des datagrammes stockées temporairement dans la mémoire tampon.

Les balayages en écriture et en lecture des différents groupes de bancs de registres de la mémoire tampon 40, qui se font pour un même groupe sans relation de phase entre eux mais selon un même ordre, et la gestion des accès aux bancs de registres des différents groupe de la mémoire tampon 30 par les ports d'entrée-sortie 21, 22, 23 et l'automate de routage 50 sont du ressort du séquenceur 40 dont le mode opératoire va être détaillé.

Le séquenceur 40 découpe le temps mesuré par une horloge en une suite répétitive de fentes temporelles dans lesquelles sont répartis, de manière invariante, les accès en écriture et en lecture des ports d'entrée-sortie 21, 22, 23 aux bancs de registres de la mémoire tampon 30.

En vue d'obtenir un fonctionnement de la mémoire tampon 30 en un ensemble de mémoires partielles circulantes 30a, 30b, 30n affectées individuellement aux trafics de données binaires reçus par les différents ports d'entrée-sortie 21, 22, 23 le séquenceur 40 suit, pour adresser les bancs de registres de la mémoire tampon, une procédure d'adressage particulière.

Cette procédure d'adressage est basée sur une répartition des bancs de registres en autant de groupes que de ports d'entrée-sortie, chaque groupe étant réservé individuellement, pour les opérations d'écriture, à un port d'entrée-sortie particulier de sorte qu'il y ait une relation biunivoque entre les groupes et les ports d'entrée-sortie pour ce qui concerne les opérations d'écriture. Une telle répartition des bancs de registres de la mémoire tampon en groupes séparés peut se faire naturellement, en utilisant, dans les adresses des bancs de registres, quelques digits. La procédure d'adressage diffère selon le mode écriture ou lecture.

Au cours d'une suite d'accès à la mémoire tampon affectés à un même port d'entrée-sortie pour des opérations d'écriture, le séquenceur 40 sélectionne le groupe de bancs de registres affecté en écriture au port d'entrée-sortie considéré, et balaye cycliquement les bancs de registres de ce groupe selon un ordre invariant sur lequel le port d'entrée-sortie n'influe pas.

Au cours d'une suite d'accès à la mémoire tampon affectés à un même port d'entrée-sortie pour une même opération de lecture, le séquenceur 40 laisse au port d'entrée-sortie le choix du groupe de bancs de registres à explorer, et, au sein de ce groupe, le choix du banc de registres pour débuter l'exploration mais impose un ordre de balayage identique à celui utilisé pour les opérations d'écriture.

Pour résumer, le séquenceur 40 alloue à chaque port d'entrée-sortie une trame périodique invariante d'accès en écriture à un unique groupe réservé de bancs de registres de la mémoire tampon et une trame périodique d'accès en lecture à un groupe de bancs de registres laissé au choix du port d'entrée-sortie, ladite trame périodique d'accès en lecture suivant le même ordre de balayage que la trame périodique utilisée en écriture pour le groupe sélectionné mais avec un déphasage laissé au choix du port d'entrée-sortie. Les trames périodiques d'accès en écriture et en lecture allouées à un même port d'entrée-sortie peuvent être enchevêtrées entre elles et avec celles affectées aux autres ports d'entrée-sortie.

Du fait de ce mode de gestion des accès des ports d'entrée sortie du commutateur de paquets à sa mémoire tampon, les adresses des bancs de registres de la mémoire tampon permettent de déterminer à la fois le port d'entrée-sortie, donc le trafic de données entrant, d'où provient le mot de données stocké par un banc de registres et la date d'inscription de ce mot puisque les accès en inscription des ports d'entrée-sortie à la mémoire ainsi que les bancs de registres adressés au cours de ces accès en inscription ne dépendent que de la variable temps délivrée par l'horloge. La lecture d'un banc de registres de la mémoire tampon donne alors une mesure implicite du délai de stockage du mot de données concerné et donc de son temps de latence au sein du commutateur de paquets, temps de latence qui est également celui du datagramme auquel il appartient.

La figure 5 illustre un exemple de séquencement conforme à cette procédure d'adressage, prévu pour un commutateur de paquets à sept ports d'entrée-sortie gérant chacun un trafic de données binaires entrant et un trafic de données binaires sortant, tous les trafics de données binaires ayant le même débit maximum garanti, et pour une mémoire tampon centrale constituée d'un module de bancs de registres adressables un par un de façon aléatoire.

L'adressage des bancs de registres reflète une organisation de la mémoire en sept groupes séparés de bancs de registres affectés, en écriture, de manière biunivoque, aux sept ports d'entrée-sortie. Il se fait à deux niveaux, un premier niveau inscrit en grand chiffre correspondant au groupe d'appartenance, c'est-à-dire au port d'entrée-sortie auquel le banc de registres concerné est affecté en écriture, et un deuxième niveau inscrit en petit chiffre donnant la position du banc de registres concerné dans son groupe d'appartenance, c'est-à-dire sa position dans l'ordre relatif invariant adopté pour balayer les bancs de registres d'un groupe concerné, à l'écriture comme à la lecture.

Avec ce type de mémoire tampon centrale architecturée en un seul module, chaque fente temporelle découpée par le séquenceur dans son signal d'horloge est affectée à un port d'entrée-sortie particulier, pour une opération de type déterminé écriture ou de lecture dans un banc précis de registres de la mémoire tampon.

Le séquencement commence par une suite de fentes temporelles 0 à 6 affectées à des accès successifs en écriture $W0_{-1},...,W6_{-1}$ dédiés à chacun des sept ports d'entrée-sortie, dans le premier banc de registres de chacun des sept groupes qui leur sont affectés individuellement en écriture.

La fente temporelle numérotée 7 n'est pas affectée aux ports d'entrée-sortie mais au changement de modes écriture lecture. Elle ne conduit à aucune opération sur la mémoire tampon mais évite que la durée d'inaccessibilité de la mémoire pendant un changement de modes écriture lecture soit imputée sur un temps d'accès de port d'entrée-sortie.

Le séquencement se poursuit par une suite de fentes temporelles 8 à 14 affectées à des accès successifs en lecture $R0-X0_{x0},...,R6-X6_{x6}$ dédiés à chacun des sept ports d'entrée-sortie. Au cours de l'une de ces fentes temporelles 8 à 14, le port d'entrée-sortie, qui a l'accès en lecture, choisi un groupe Xi de bancs de registres dans lequel il veut lire, et, au sein de ce groupe Xi, un banc de registres particulier xi. Le choix du groupe à lire Xi figure dans sa requête d'émission puisqu'il correspond au port d'entrée-sortie de provenance du datagramme à émettre tandis que le choix du banc de registres xi à lire au sein du groupe élu Xi est un choix implicite déduit de l'adresse du banc de registres contenant le début du datagramme recherché et de la progression de lecture du datagramme au cours des accès successifs en lecture attribués au même port d'entrée-sortie.

La fente temporelle 15 n'est pas affectée aux ports d'entrée-sortie mais au changement de modes lecture écriture. Elle joue un rôle analogue à la fente temporelle 7.

Les fentes temporelles suivantes 16 à 22 sont à nouveau consacrées à des accès successifs en écriture W0-$_2$,...,W6-$_2$ dédiés à chacun des sept ports d'entrée-sortie, dans chacun des sept groupes qui leur sont réservés individuellement en écriture mais cette fois-ci dans le deuxième banc de registres de chaque groupe et non dans le premier.

La fente temporelle 23 n'est pas affectée aux ports d'entrée-sortie mais au changement de modes écriture lecture. Elle joue un rôle analogue aux fentes temporelles 7 et 15.

Les fentes temporelles suivantes 24 à 30 sont à nouveau affectées à des accès successifs en lecture R0-X0$_{(x0+1)}$,...,R6-X6$_{(x6+1)}$ dédiés à chacun des sept ports d'entrée-sortie. Au cours de l'une de ces fentes temporelles 24 à 30, le port d'entrée-sortie qui a l'accès en lecture choisi un groupe de bancs de registres dans lequel il veut lire supposé être le même que dans son accès précédent en lecture, le datagramme recherché n'étant pas encore entièrement récupéré, et, au sein de ce groupe, le banc de registres suivant celui précédemment lu xi+1.

La fente temporelle 31 n'est pas affectée aux ports d'entrée-sortie mais au changement de modes lecture écriture. Elle joue un rôle analogue aux fentes temporelles 7, 15 et 23.

Au cours des fentes temporelles suivantes, les groupements d'accès en écriture et en lecture dédiés à chacun des ports d'entrée-sortie se succèdent régulièrement séparés par des fentes temporelles consacrées aux changements de modes écriture lecture.

A chaque accès successif en écriture d'un même port d'entrée-sortie, le banc de registres concerné au sein du groupe de bancs de registres réservé en écriture au port d'entrée-sortie considéré progresse d'une unité dans l'ordre immuable adopté pour le balayage en écriture du groupe en question de sorte, qu'au bout d'un certain délai, il y a rebouclage et écrasement de données inscrites précédemment par de nouvelles données, le délai étant celui que l'on considère comme délai maximal toléré pour le traitement de routage d'un datagramme par le commutateur de paquets considéré.

A chaque accès en lecture d'un même port d'entrée-sortie, le banc de registre concerné au sein du groupe de banc de registre exploré progresse d'une unité dans l'ordre adopté pour le balayage en écriture du groupe concerné et cela, jusqu'à ce que le port d'entrée-sortie effectuant la lecture estime avoir récupéré la totalité du datagramme recherché, cette estimation étant basée sur une connaissance a priori de la longueur du datagramme figurant dans des données de services incluses dans en tête du datagramme.

Le regroupement de plusieurs accès à la mémoire, de même nature, écriture ou lecture, permet de minimiser la fréquence des changements de modes écriture lecture et inversement, qui sont consommateurs de temps et d'énergie, et qui sont à l'origine de bruits électromagnétiques.

La trame périodique d'accès en écriture allouée à un même port d'entrée-sortie doit permettre d'absorber le débit maximum garanti pour le trafic de données reçu par ce port d'entrée-sortie. Si ce débit est B et la longueur d'un banc de registres de la mémoire tampon b, cela implique que le laps de temps séparant deux écritures successives pour le compte de ce même port d'entrée-sortie doit être égal à b/B. Par exemple, si le débit du trafic reçu de données binaires est de 100 Mbits/s et la largeur des bancs de registres de 32 bits, un accès en écriture devra être assuré toutes les 320 ns.

De la même manière, la trame périodique d'accès en lecture allouée à un même port d'entrée-sortie doit lui permettre d'écouler, par la liaison physique de transmission qu'il utilise à l'émission, un trafic sortant de données au débit maximal garanti. Par exemple, si ce débit maximal garanti à l'émission est de 100 Mbits/s et la largeur des bancs de registres de la mémoire tampon de 32 bits, un accès en lecture devra être assuré toutes les 320 ns.

Comme l'on a considéré dans l'exemple de séquencement précédent que tous les trafics de données entrant et sortant du commutateur de paquets considéré avaient le même débit maximum garanti, les laps de temps séparant deux accès en écriture et deux accès en lecture attribués à un même port d'entrée-sortie ont une même durée repérée TS sur la figure 5.

La mémoire tampon doit supporter en écriture et en lecture les débits imposés par l'ensemble des trames périodiques d'accès en écriture et en lecture allouées aux différents ports d'entrée-sortie. Comme cette mémoire tampon fonctionne en temps partagé entre les différents ports d'entrée-sortie, elle doit supporter en écriture et en lecture les sommes des débits binaires maximaux garantis à l'émission et à la réception pour l'ensemble des ports d'entrée-sortie du commutateur de paquets. Ces sommes atteignent rapidement des valeurs très élevées. Par exemple, un commutateur de paquets avec 15 ports d'entrée-sortie ayant des débits maximum garantis de 100 Mbits/s doit avoir une mémoire tampon centrale supportant à l'écriture et à la lecture des débits de 1,5 Gbits/s. On se heurte donc rapidement à des débits très élevés au niveau de la mémoire tampon centrale.

Pour résoudre ce problème de débits très élevés, on utilise dans la mémoire tampon centrale des bancs dont les registres sont inscrits et lus simultanément en parallèle. Les débits exigés au niveau des bancs de registres sont ainsi divisés par leur nombre de registres. Avec des bancs de 32 registres à inscriptions et lectures parallèles, les débits de 1,5 Gbits/s au niveau global de la mémoire sont ramenés à 47 Mbits/s au niveau des bancs de registres.

Une solution pour absorber les débits très élevés exigés au niveau de la mémoire consiste donc à jouer sur le nombre de registres à lectures et inscriptions en parallèle des bancs de registres composants la mémoire tampon centrale. Cette solution ne peut cependant être poussée très loin car elle a des inconvénients. Un premier inconvénient est la complexité des circuits de servitude des bancs de registres nécessaires pour que leurs registres puissent être lus et écrits en parallèle, qui augmente avec le nombre de registres desservis en parallèle en écriture et en lecture. Un deuxième inconvénient est la diminution du taux d'occupation des registres de la mémoire par des données utiles due au fait que les datagrammes à mémoriser temporairement ont en général un nombre variable de bits et occupent rarement un nombre entier de bancs de registres de sorte que l'on se retrouve très souvent, en fin de mémorisation d'un datagramme, avec un dernier banc de registres partiellement occupé dont le pourcentage d'inoccupation croît avec la taille. En dernier lieu, la longueur d'un banc de registres ne peut être plus grande que celle correspondant à la moitié du temps de silence minimum séparant deux datagrammes si l'on veut préserver un banc de registres codant une absence de données entre deux datagrammes successifs.

Pour permettre l'absorption par la mémoire tampon centrale du très gros débit de données binaires exigé, on propose, non pas d'augmenter le nombre de registres de ses bancs mais de la concevoir en plusieurs modules indépendants fonctionnant en parallèle.

Le séquenceur alloue alors chaque fente temporelle qu'il découpe dans son signal d'horloge à autant d'accès mémoire simultanés qu'il y a de modules, ces accès mémoire simultanés étant attribués à des trafics de données distincts, un même port d'entrée-sortie ne pouvant avoir au plus que deux accès simultanés à deux bancs de registres différents, l'un en mode d'écriture et l'autre en mode de lecture.

Les bancs de registres de la mémoire tampon restent organisés en autant de groupes séparés que de ports d'entrée-sortie, chacun d'eux étant affecté en propre à un port d'entrée-sortie déterminé pour l'enregistrement de son trafic de données entrant. Mais ils sont répartis, au sein de chaque groupe, entre les différents modules.

La possibilité d'accès mémoire simultanés au cours d'une même fente temporelle permet, pour un même débit apparent de la mémoire, d'allonger la durée d'une fente temporelle dans le rapport du nombre de ces accès simultanés et donc de diminuer dans le même rapport le débit exigé au niveau d'un module.

Comme précédemment, le séquenceur affecte, à chaque port d'entrée-sortie, au cours de fentes temporelles distinctes, une suite d'accès en écriture aux bancs de registres du groupe qui lui est réservé et une suite d'accès en lecture aux bancs de registres d'un groupe qu'il peut choisir, toujours en respectant un ordre de balayage immuable au sein des groupes. Mais les bancs de registres sélectionnés d'un accès en écriture au suivant ou d'un accès en lecture au suivant peuvent appartenir à des modules différents.

Les modules sont préférablement de mêmes capacités et les bancs de registres appartenant à un même groupe équitablement répartis entre les différents modules. Cela permet au séquenceur d'adopter, pour les différents modules, des séquencements identiques entre eux au niveau des attributions d'accès aux ports d'entrée-sortie et du mode écriture ou lecture mais déphasés entre eux pour respecter la contrainte d'attribution à un port d'entrée-sortie, d'au plus deux accès simultanés à la mémoire tampon, l'un en lecture, l'autre en écriture. En effet, grâce au déphasage il est possible de faire apparaître des modes lecture ou écriture différents et/ou des ports d'entrée-sortie différents pour des accès simultanés au cours d'une même fente temporelle.

La détermination du nombre Nm de modules nécessaires, c'est-à-dire du rapport de réduction pour s'accommoder du débit maximum rendu possible par la technologie utilisée pour les bancs de registres tout en satisfaisant les exigences des débits en écriture et en lecture découlant des débits maxima garantis pour les trafics de données binaires entrant et sortant du commutateur de paquets considéré se fait en cherchant à satisfaire l'inégalité :

$$N_m \geq 2(N_p + 1)\frac{T_a}{T_S}$$

$N_m$ étant le nombre de modules,
$N_p$ étant le nombre de ports d'entrée-sortie du commutateur de paquets considéré, nombre qui correspond au nombre de couples de trafics de données entrant et sortant par le commutateur de paquets considéré,
$T_a$ étant la durée des cycles d'accès en écriture et en lecture dans un banc de registres de la mémoire tampon imposée par la technologie utilisée, et
$T_S$ étant la période séparant deux accès de même nature (écriture ou lecture) pour le compte d'un même port d'entrée-sortie au niveau des bancs de registres de la mémoire tampon permettant de satisfaire les débits de données garantis pour les trafics de données entrant et sortant du commutateur de paquets considéré.

La durée $T_S$ se déduit du débit minimum requis pour que la mémoire centrale s'accommode des débits maxima garantis pour les trafics de données franchissant le commutateur de paquets considéré. Si les trafics de données entrant et sortant du commutateur de paquets considéré ont tous le même débit maximum garanti dm, la durée $T_S$ se déduit de ce débit maximum dm et du nombre de registre B des bancs de la mémoire tampon centrale par la relation :

$$T_s = \frac{B}{d_m}$$

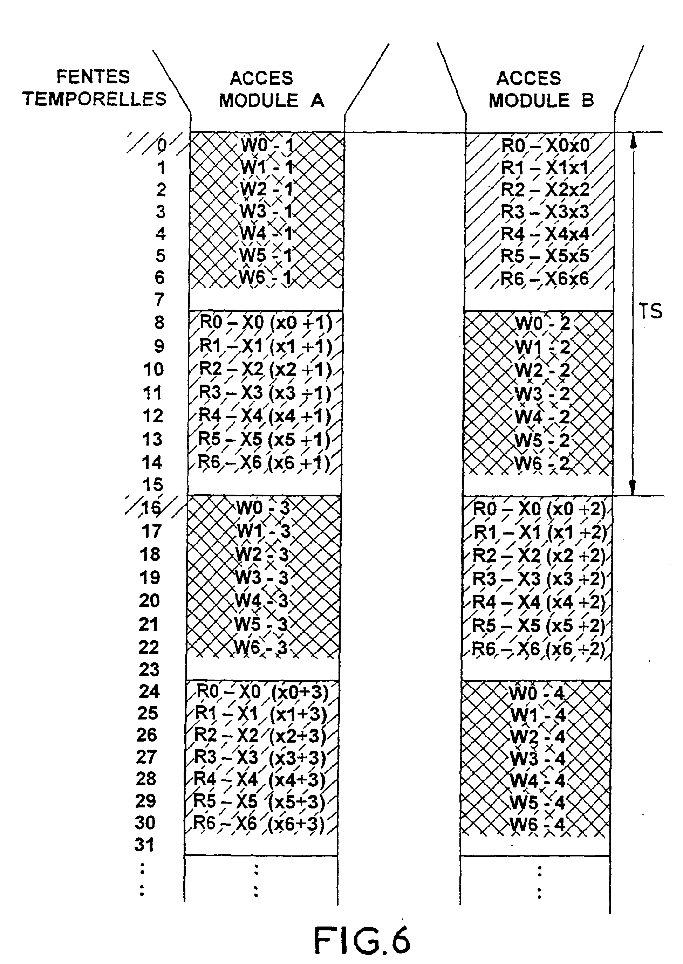

La figure 6 illustre un exemple de séquencement en écriture et en lecture pour une mémoire tampon centrale à deux modules A et B de même capacité fonctionnant en parallèle, toujours dans le cadre d'un commutateur de paquets à sept ports d'entrée-sortie 0 à 6 gérant chacun un trafic de données binaires entrant et un trafic de données binaires sortant, tous les trafics de données binaires ayant le même débit maximal garanti. L'utilisation de deux modules permet de faire fonctionner chaque module à un débit moitié de celui de la mémoire tampon globale.

Le séquenceur découpe, dans son signal d'horloge, des fentes temporelles successives de durée suffisante pour une opération d'écriture ou de lecture dans un banc de registres des modules.

Comme précédemment, les bancs de registres de la mémoire tampon sont répartis en sept groupes distincts 0 à 6, autant que de ports d'entrée-sortie, chacun des groupes étant réservé en écriture à un port d'entrée-sortie particulier 0, 1, 2, 3, 4, 5, 6 mais ces groupes ont leurs bancs de registres distribués de façon égale entre les deux modules A et B. Par exemple, en ayant, comme représenté dans la figure 6, leurs bancs de registres dont la partie d'adresse relative à leur ordre de balayage en écriture, au niveau d'un groupe, est impaire placés dans le module A et leurs bancs de registres dont la partie d'adresse relative à leur ordre de balayage en écriture, au niveau d'un groupe, est paire placés dans le module B.

La notation adoptée dans cette figure 6 pour l'adressage des bancs de registres est reprise de la figure 5 avec un double repérage par un premier grand chiffre donnant le groupe d'appartenance du banc de registres considéré, c'est-à-dire le port d'entrée-sortie auquel il est affecté en écriture, et par un deuxième petit chiffre donnant sa position dans le groupe par rapport à l'ordre relatif immuable adopté pour balayer les bancs de registres d'un groupe à l'écriture ou à la lecture.

Avec ce type de mémoire tampon centrale architecturée en deux modules A et B, chaque fente temporelle découpée par le séquenceur dans son signal d'horloge est affectée à deux accès simultanés à la mémoire tampon centrale, un pour le module A et l'autre pour le module B, chacun attribué à un port d'entrée-sortie prédéterminé pour une opération de type également prédéterminé écriture ou de lecture dans un banc précis de registres de la mémoire tampon.

Pour respecter la contrainte sur les affectations des accès simultanés à la mémoire tampon qui doivent toujours être attribuées à des trafics différents de données, le séquencement proposé attribue systématiquement, au cours d'une même fente temporelle, les accès simultanés aux deux modules A et B, à un même port d'entrée-sortie mais l'un en mode d'écriture et l'autre en mode de lecture, les modes écriture et lecture étant échangés périodiquement entre les deux modules A et B.

Le séquencement commence par une suite de fentes temporelles 0 à 6 affectées :

- pour le module A, à des accès successifs en écriture W0-$_1$,...,W6-$_1$ dédiés à chacun des sept ports d'entrée-sortie 0,...,6, dans le premier banc de registres de chacun des sept groupes qui leur sont affectés individuellement en écriture, ces premiers bancs de registres des sept groupes étant supposés avoir une adresse 1 impaire au sein de leurs groupes et donc appartenir au module A, et
- pour le module B, à des accès successifs en lecture R0-X0$_{x0}$, ...,R6-X6$_{x6}$ de bancs de registres du module B dédiés à chacun des sept ports d'entrée-sortie 0,...,6. Au cours de l'une de ces fentes temporelles 0 à 7, le port d'entrée-sortie qui a l'accès en écriture choisit un groupe Xi de bancs de registres dans lequel il veut lire, et, au sein de ce groupe Xi, un banc de registres particulier xi dont on suppose d'adresse paire au sein de son groupe. Si ce n'est pas le cas, il attend un accès ultérieur en lecture du module A.

La fente temporelle numérotée 7 n'est pas affectée aux ports d'entrée-sortie mais au changement de modes écriture lecture dans les deux modules A et B. Elle ne conduit à aucune opération sur la mémoire tampon mais évite que la durée d'inaccessibilité de la mémoire pendant un changement de modes écriture lecture au sein des modules A et B soit imputée sur un temps d'accès de port d'entrée-sortie.

Le séquencement se poursuit par une suite de fentes temporelles 8 à 14 affectées :

- pour le module A, à des accès successifs en lecture R0-X0$_{(x0+1)}$, ...,R6-X6$_{(x6+1)}$ dédiés à chacun des sept ports d'entrée-sortie. Le port d'entrée-sortie, qui a l'accès en lecture, choisit un groupe Xi de bancs de registres dans lequel il veut lire supposé être le même que lors de son accès précédent en lecture sur le module B, le datagramme recherché étant supposé non entièrement récupéré, et, au sein de ce groupe Xi, le banc de registres xi+1 d'adresse impaire, qui suit celui xi d'adresse paire, lu précédemment dans le module B,
- pour le module B, à des accès successifs en écriture W0-$_2$,...., W6-$_2$ dédiés à chacun des sept ports d'entrée-sortie, dans le deuxième banc de registres de chacun des sept groupes qui leurs sont individuellement affectés en écriture, ce deuxième banc ayant une adresse paire et se trouvant dans le module B.

La fente temporelle 15 n'est pas affectée aux ports d'entrée-sortie mais au changement de modes lecture écriture. Elle joue un rôle analogue à la fente temporelle 7.

Pour le module A, les fentes temporelles 16 à 22 correspondent à des accès successifs en écriture $W0_{-3}$,...,$W6_{-3}$ dédiés à chacun des sept ports d'entrée-sortie, dans chacun des sept groupes qui leur sont réservés individuellement en écriture mais cette fois-ci dans le troisième banc de registres de chaque groupe qui, comme le premier a un adressage impair.

Pour le module B, les fentes temporelles 16 à 22 correspondent à des accès successifs en lecture accordés à chacun des sept ports d'entrée-sortie 0,...,6. Le port d'entrée-sortie, qui a l'accès en lecture, choisit un groupe Xi de bancs de registres dans lequel il veut lire. Ce groupe Xi est supposé être le même que lors de son accès précédent en lecture sur le module A, le datagramme recherché étant supposé non entièrement récupéré, et, au sein de ce groupe Xi, le banc de registres xi+2 d'adresse paire, qui suit celui xi+1 d'adresse impaire, lu précédemment dans le module A

La fente temporelle 23 n'est pas affectée aux ports d'entrée-sortie mais au changement de modes écriture lecture. Elle joue un rôle analogue aux fentes temporelles 7 et 15.

Les fentes temporelles suivantes 24 à 30 sont à nouveau affectées, pour le module A, à des accès successifs en lecture $R0-X0_{(x0+3)}$,... ,$R6-X6_{(x6+3)}$ dédiés à chacun des sept ports d'entrée-sortie. Au cours de l'une de ces fentes temporelles 24 à 30, le port d'entrée-sortie qui a l'accès en écriture choisi un groupe Xi de bancs de registres dans lequel il veut lire supposé être toujours le même que dans son accès précédent en lecture, le datagramme recherché étant supposé non entièrement récupéré, et, au sein de ce groupe Xi, le banc de registres xi+3 d'adresse impaire, suivant celui xi+2 d'adresse paire, précédemment lu dans le module B.

Pour le module B, les fentes temporelles 24 à 30 sont affectées, à nouveau, à des accès successifs en écriture $W0_{-4}$,...,$W6_{-4}$

La fente temporelle 31 n'est pas affectée aux ports d'entrée-sortie mais au changement de modes lecture écriture. Elle joue un rôle analogue aux fentes temporelles 7, 15 et 23.

Au cours des fentes temporelles suivantes, les paires d'accès simultanés aux modules A et B l'un en écriture, l'autre en lecture en lecture dédiés aux ports d'entrée-sortie se succèdent régulièrement séparées par des fentes temporelles consacrées aux échanges de modes écriture lecture entre les deux modules A et B.

A chaque accès successif en écriture d'un même port d'entrée-sortie, le banc de registres concerné au sein du groupe de bancs de registres réservé en écriture au port d'entrée sortie considéré change de module en passant du module A au module B ou inversement et progresse d'une unité dans l'ordre immuable adopté pour le balayage en écriture du groupe en question de sorte, qu'au bout d'un certain délai, il y a rebouclage et écrasement de données inscrites précédemment par de nouvelles données, le délai étant celui que l'on considère comme délai maximal toléré pour le traitement de routage d'un datagramme par le commutateur de paquets considéré.

A chaque accès en lecture d'un même port d'entrée-sortie, le banc de registre concerné au sein du groupe de banc de registres exploré change de module en passant du module A au module B ou inversement et progresse d'une unité dans l'ordre immuable adopté pour le balayage en écriture du groupe concerné et cela, jusqu'à ce que le port d'entrée-sortie effectuant la lecture estime avoir récupéré la totalité du datagramme recherché, cette estimation étant basée sur une connaissance a priori de la longueur du datagramme figurant dans des données de services incluses dans en tête du datagramme.

Le regroupement de plusieurs accès à un module A ou B, de même nature, écriture ou lecture, permet de minimiser la fréquence des changements de modes écriture lecture et inversement qui sont consommateurs de temps et d'énergie, et qui sont à l'origine de bruits électromagnétiques.

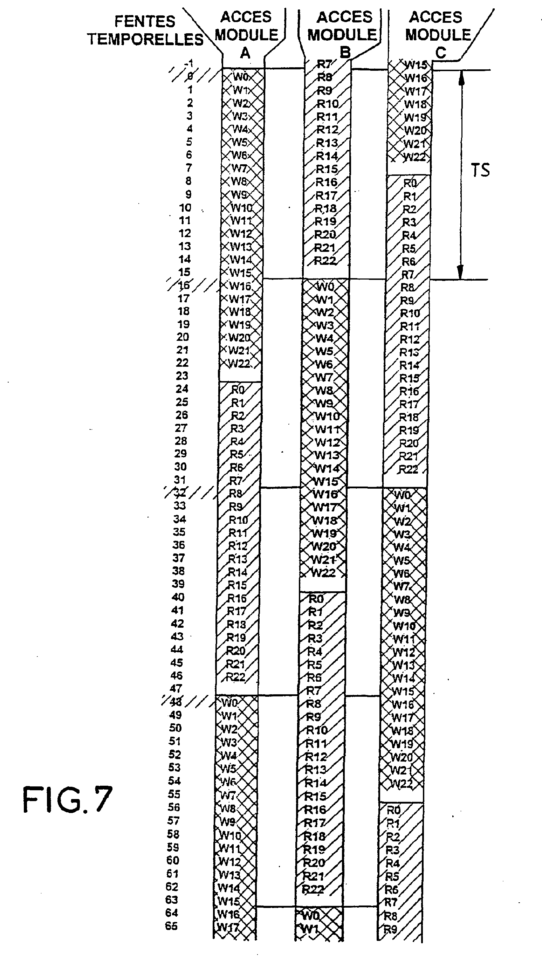

Les figures 7 et respectivement 8 illustrent des exemples de séquencement en écriture et en lecture pour des mémoires tampon centrales à trois et respectivement quatre modules de mêmes capacités fonctionnant en parallèle, dans le cadre de commutateurs de paquets à vingt trois et respectivement trente et un ports d'entrée-sortie gérant chacun un trafic de données binaires entrant et un trafic de données binaires sortant, tous les trafics de données binaires ayant le même débit maximum garanti. L'utilisation de trois modules permet de faire fonctionner chaque module au tiers du débit de la mémoire globale et l'utilisation de quatre modules au quart du débit de la mémoire globale.

Dans les cas d'utilisation en parallèle de plus de deux modules, il n'est plus possible de respecter la contrainte d'attribution à un même port d'entrée-sortie d'au plus deux accès simultanés à la mémoire tampon, l'un en écriture et l'autre en lecture en jouant uniquement sur les modes écriture ou lecture, ce qui correspondait à utiliser des séquencements pour les deux modules identiques du point de vue des ports d'entrée-sortie et des modes écriture lecture mais déphasés de 180 degrés. Il faut nécessairement, que certains des accès simultanés n'aient pas les mêmes ports d'attribution. Cela peut toujours être obtenu en utilisant pour tous les modules, les mêmes séquencements du point de vue des ports d'entrée-sortie et des modes lecture écriture, mais ils doivent alors être déphasés de la quantité adéquate, 120 degrés pour trois modules et 90 degrés pour quatre modules.

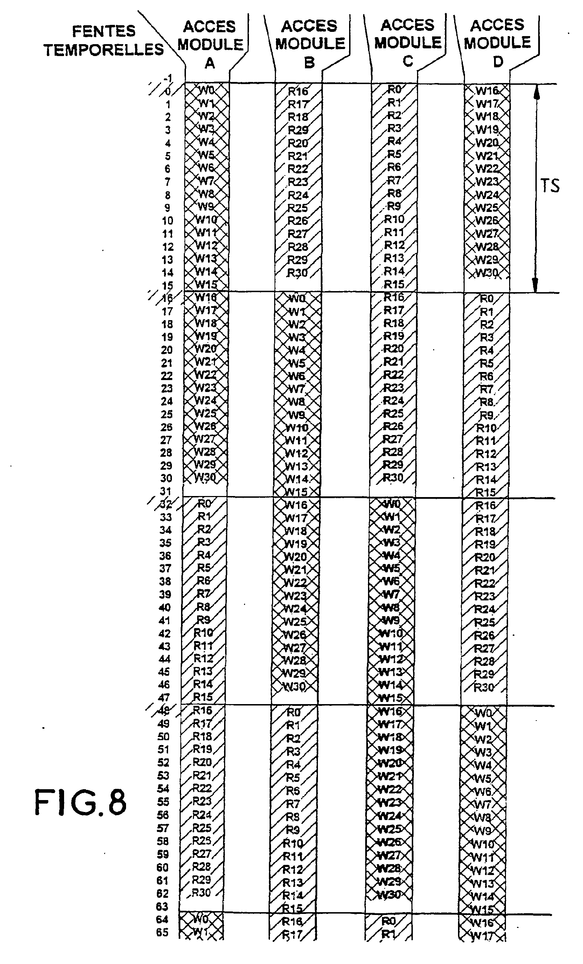

Dans un but de simplification, les accès figurants dans les séquencements proposés pour quatre et trois modules, ne sont plus repérés dans les figures 7 et 8 que par le port d'entrée-sortie attribué et le mode écriture ou lecture imposé. Il va de soi, que, comme dans les figures 5 et 6, chaque accès spécifie non seulement le port d'entrée-sortie auquel il est attribué et le mode écriture ou lecture autorisé mais également, un groupe de bancs de registres et, au sein de ce groupe, un banc de registres particulier déterminés l'un et l'autre selon les mêmes règles que précédemment.

Pour les opérations d'écriture, le groupe de bancs de registres spécifié est celui réservé en propre au port d'entrée-sortie d'attribution et le banc de registres sélectionné dans ce groupe, le prochain à inscrire suivant l'ordre invariant de balayage des bancs de registres du groupe concerné.

Pour les opérations de lecture, le groupe de banc de registres est spécifié par le port d'entrée-sortie d'attribution et le banc de registres sélectionné au sein du groupe, le prochain à lire selon l'ordre invariant de balayage des bancs de registres du groupe concerné, le port d'entrée-sortie d'attribution spécifiant de plus l'adresse dans le groupe concerné du banc de registres débutant une campagne de lecture.

Avec les séquencements qui viennent d'être proposés, les regroupements des fentes temporelles successives autour d'un même mode écriture ou lecture permettent non seulement de limiter la fréquence des changements de modes de fonctionnement pour les modules de la mémoire mais également de diminuer les commutations à haute fréquence du bus d'adresse puisqu'ils se font également en conservant, dans le mode d'écriture, une fraction de l'adressage inchangée, celle correspondant à l'adresse des bancs de registres au sein des différents groupes. Cette fraction d'adresse, qui correspond de manière biunivoque à la date d'inscription, est de loin la plus importante car il y a beaucoup plus de bancs de registres dans un groupe que de ports d'entrée-sortie.

L'ensemble des mots écrits dans les bancs de registres de la mémoire tampon centrale correspondant à un même datagramme constitue une séquence linéaire d'informations. Cette séquence linéaire d'informations est localisée au sein du groupe de bancs de registres attribué en propre au port d'entrée-sortie assurant sa réception au niveau du commutateur de paquets et est accessible à partir la connaissance de l'adresse, au sein de ce groupe, du banc de registres stockant le mot de début du datagramme. Il est donc possible de sécuriser au sein d'un commutateur de paquets, l'exploitation des données d'un datagramme stockées dans sa mémoire tampon centrale, en associant aux mots qui les regroupent dans cette mémoire tampon centrale, c'est-à-dire au niveau de chaque banc de registres de cette mémoire tampon centrale, un ou plusieurs bits de détection d'erreur portant sur le contenu informationnel du banc de registres considéré et/ou l'adresse au sein de la mémoire du banc de registres considéré. Ces bits de détection d'erreur, qui sont avantageusement déterminés par le procédé de sécurisation décrit dans la demande de brevet français n°2 723 222 déposé par la société Sextant Avionique, permettent de faire cesser la transmission, au travers du réseau, de datagrammes altérés du fait soit :

- • d'une défaillance de la mémoire tampon centrale du commutateur de paquets considéré (données erronées lues dans un banc de registres),
- • d'une défaillance de la génération des séquences d'adresses de bancs de registres de la mémoire tampon centrale appelées par un port d'entrée-sortie au cours d'une séquence d'accès successifs en lecture à la mémoire tampon centrale (succession d'adresses erronées),
- • d'une défaillance d'une consigne d'attribution de datagramme (adresse initiale de lecture de datagramme erronée).

La présence de bits de détection d'erreurs locaux ajoutés au niveau de chaque banc de registres de la mémoire tampon centrale d'un commutateur de paquets mais non retransmis en dehors d'un commutateur de paquets, permet de dissocier les dysfonctionnements au sein du commutateur de paquets lui-même, des dysfonctionnements de la couche physique liés à la mise en oeuvre des signaux de transmission acheminant les datagrammes sur les liaisons physiques de transmission utilisées par le réseau en dehors de ses commutateurs de paquets, les dysfonctionnements de la couche physique faisant l'objet par ailleurs d'une surveillance spécifique, au moyen de bits de correction d'erreur de type CRC (sigle tiré de l'anglo-saxon "Cyclic Redundancy Code") ou parité ajoutés à chaque datagramme dès son émission et le suivant tout au long de son acheminement au travers du réseau.

Ces bits de détection d'erreur peuvent être déterminés par un port d'entrée-sortie lorsqu'il prépare un mot à inscrire dans un banc de registres de la mémoire tampon centrale et inscrits avec le mot considéré lorsque le séquenceur lui attribue un accès en écriture à la mémoire tampon centrale, à la condition que les bancs de registres de la mémoire tampon centrale soient dimensionnés en conséquence, c'est-à-dire qu'ils aient un nombre de registres adaptés à la dimension du mot prolongé par les bits de détection d'erreurs.

Généralement, c'est le cas de réseaux commutés de type ethernet, les datagrammes sont séparés, dans leur acheminement sur une même liaison physique du réseau, par des intervalles de temps minima permettant d'insérer, en préambule, dans le signal de transmission de chaque datagramme, un signal de service utilisé par le démodulateur disposé côté réception pour récupérer la porteuse de modulation utilisée et assurer la démodulation. Lors de ces intervalles de temps de séparation, le trafic de données entrant reçu par un port d'entrée-sortie continue à être enregistré dans la mémoire tampon centrale alors qu'il n'achemine aucune donnée. On se retrouve alors avec, dans la mémoire tampon centrale, des bancs de registres contenant des mots de données appartenant à des datagrammes et des bancs de registres contenant des mots de données sans signification dits "mots de gap", correspondant aux intervalles de temps de séparation des datagrammes successifs reçus par un même port d'entrée-sortie. Il est avantageux, pour améliorer la sécurisation du fonctionnement d'un commutateur de paquets, d'ajouter, au niveau de chaque banc de registres de la mémoire tampon centrale, en plus d'un champ de bits de détection d'erreurs, un champ de bits d'identification de présence de datagramme dits "drapeau de présence de datagramme", mis à jour à partir d'un signalement de réception d'un datagramme engendré par les ports d'entrée-sortie.

La figure 9 montre une composition possible d'un mot stocké dans un banc de registres de la mémoire tampon centrale, selon qu'il appartient à un datagramme "data" ou à un intervalle de temps de séparation entre deux datagrammes "no data".

Dans cette figure 9, les bancs de registres de la mémoire tampon centrale sont supposés avoir trente six registres de un bit, trente deux (bits 0 à 31) constituant un champ 100 réservé pour le stockage d'un mot de datagrammes et quatre (bits 32 à 35) constituant deux champs 101 et 102 réservés pour des informations de service, l'un 101 contenant deux bits de détection d'erreur S0 et S1, l'autre 102 contenant un drapeau de présence de datagramme constitué de deux bits.

Lorsqu'un banc de registres contient un mot appartenant à un datagramme, comme c'est le cas du banc de registres dénommé "data", il renferme le mot appartenant au datagramme dans son champ 100 de trente deux bits, deux bits de détection d'erreur S0 et S1 dans son champ 101, bits dont les valeurs sont fonction de celle du mot stocké dans le champ 100 et éventuellement de l'adresse du banc de registres comme l'enseigne la demande de brevet français 2 723 222, et deux bits de présence de datagramme dans son champ 102 mis à la valeur logique 1.

Lorsqu'un banc de registres ne contient pas de mot appartenant à un datagramme, comme c'est le cas du banc de registre dénommé "no data", il renferme, dans son champ 100, trente deux bits de valeurs indifférentes à l'exception des bits 30 et 31 forcés à zéro par convenance, dans son champ 101, deux bits de détection d'erreur S1 et S2 mis arbitrairement à 0, et, dans son champ 102, deux bits de présence de datagramme mis à la valeur logique 0 signifiant l'absence de datagramme. Les valeurs des bits 0 à 29 du champ 100, qui sont indifférentes, sont préférablement prises égales à celles antérieurement présentes sur le bus de données. Cela permet de minimiser le nombre de commutations à haute fréquence affectant le bus de données, ce qui est avantageux pour la consommation et la diminution des bruits parasites.

Pour améliorer la sécurisation du fonctionnement du commutateur de paquets, on propose de donner à l'automate de routage la faculté d'accéder aux bancs de registres de la mémoire tampon centrale, en concurrence avec les ports d'entrée-sortie pour lui permettre de stocker, dans les bancs de registres ne contenant pas de mots de datagramme, des informations sur les consignes de routage des datagrammes pouvant être vérifiées, par exemple par les gestionnaires d'émission des ports d'entrée-sortie.

Pour ce faire, on intercale, dans le séquencement des accès des ports d'entrée-sortie à la mémoire tampon organisé par le séquenceur, un ou plusieurs accès réservés à l'automate de routage, toujours en prenant soin que le séquencement ne dépende que de la variable temps mesurée par l'horloge. Une façon de faire est de configurer le séquencement des accès des ports d'entrée-sortie en tenant compte d'un ou deux ports d'entrée-sortie virtuels et d'affecter les accès réservés à ces ports d'entrée-sortie virtuels à l'automate de routage, celui-ci déterminant alors à sa convenance l'adresse du banc de registres dans lequel il opère une opération de lecture ou d'écriture.

Avantageusement, l'automate de routage utilise ses accès à la mémoire tampon pour adjoindre à chaque datagramme en cours de stockage, une étiquette d'encapsulation de la taille d'un banc de registres, renfermant le profil de diffusion du datagramme, c'est-à-dire les différents ports d'entrée-sortie du commutateur de paquets par lesquels le datagramme considéré doit être réémis et éventuellement, la longueur du datagramme considéré.

Le stockage du profil de diffusion permet, lors de la lecture du datagramme associé en vue de son émission sur un port d'entrée-sortie particulier, de vérifier que cette opération d'émission concorde bien avec le profil de diffusion prévu. Il évite de faire porter sur le mécanisme de codage du datagramme (CRC ou parité) la détection d'un dysfonctionnement du commutateur de paquets par un dispositif placé en aval dans le réseau.

Le stockage de la longueur d'un datagramme permet de le rendre autoextractible si l'étiquette d'encapsulation est placée dans un banc de registres précédant le premier mot du datagramme.

Avantageusement, le profil de diffusion figurant dans l'étiquette d'encapsulation peut être dynamique, c'est-à-dire comporter des drapeaux affectés à chaque port d'entrée-sortie pour indiquer si le datagramme associé doit être réémis par le port d'entrée-sortie considéré ou non, activés par l'automate de routage et désactivés par les circuits de gestion d'émission des ports d'entrée-sortie. Cela permet d'éviter la transmission d'un datagramme plus d'une fois par un même port d'entrée-sortie.

La figure 10 montre une composition possible d'une étiquette d'encapsulation de la taille d'un banc de trente six registres de un bit dont un champ 200 de vingt cinq bits réservé au profil de diffusion permet de gérer vingt cinq ports d'entrée-sortie en émission, et un champ 201 de onze bits pour la longueur du datagramme. Une telle étiquette est particulièrement adaptée à l'encapsulation de trames ethernet dont la longueur comprise entre 64 et 1518 octets se code sur 11 bits sans utiliser les codes de présence ou d'absence de datagramme (champ 102 figure 9).

**Revendications**

1. Commutateur de paquets (1) pour trames d'informations de tailles variables, avec plusieurs ports d'entrée et plusieurs ports de sortie (21, 22, 23) assurant les accès de trafics de données entrants et sortants empruntant des liaisons physiques de transmission à l'extérieur du commutateur de paquets (1) et acheminant des informations renfermant des datagrammes constitués de données binaires de message et de données binaires de service contenant des consignes de routage, chaque port d'entrée, respectivement de sortie, (21, 22, 23) contrôlant les accès au commutateur de paquets (1) d'un trafic de données entrant, respectivement d'un trafic de données sortant et chaque liaison physique ayant un débit maximum imposé à la réception comme à l'émission, ledit commutateur (1) comportant :

   au niveau de chacun de ses ports d'entrée (21, 22, 23) :

      • un circuit démodulateur (220, 221) assurant la démodulation permettant le passage des signaux de transmission véhiculés par les liaisons de transmission qui leurs sont raccordées, aux datagrammes qu'ils contiennent et,
      • un circuit d'extraction des données binaires de service contenues dans les datagrammes reçus,

   au niveau de chacun de ses ports de sortie (21, 22, 23) :

      • un circuit modulateur (220, 221) assurant la modulation permettant le passage des datagrammes aux signaux de transmission véhiculés par les liaisons de transmission qui leur sont raccordées, et
      • un circuit de gestion d'émission (223) exécutant des consignes d'aiguillage concernant les datagrammes en transit, reçus par le commutateur (1) sur ses autres ports d'entrée-sortie (21, 22, 23), et

   à un niveau central,

      • une mémoire tampon (30) avec un ensemble de bancs de registres mémoire adressables en écriture et en lecture pour stocker temporairement les trafics de données entrant par les ports d'entrée (21, 22, 23), en attente d'aiguillage des datagrammes qu'ils contiennent pour réexpédition vers un ou plusieurs ports de sortie (21, 22, 23), et avec des bus d'adressage, de données et de contrôle (d, ad) permettant la sélection en écriture ou en lecture de chacun de ses bancs de registres, le nombre des bancs de registres étant au moins égal à celui des ports d'entrée (21, 22, 23) et suffisant à stocker les trafics de données reçus sur chaque port d'entrée (21, 22, 23) sur une durée compatible avec un temps maximum alloué au commutateur (1) pour aiguiller les datagrammes,
      • un séquenceur (40) rythmé par une horloge, gérant les bus d'adresses, de données et de contrôle lecture-écriture (d, ad) de la mémoire tampon (30), et les accès des circuits de démodulation (221) et de gestion d'émission (223) à la mémoire tampon(30), cette gestion consistant à :

         - partager les bancs de registres de la mémoire tampon (30) en autant de groupes distincts (30a, 30b, 30n) que de ports d'entrée (21, 22, 23),
         - balayer, en écriture, les bancs de registres de chaque groupe (30a, 30b, 30n) d'une manière cyclique selon une loi de balayage invariante,
         - accorder à chaque port d'entrée (21, 22, 23) un accès exclusif en écriture à un seul groupe (30a, 30b, 30n) de bancs de registres qui lui est affecté en propre, selon une périodicité compatible avec le débit maximum du trafic de données entrant dans le commutateur (1) par le port d'entrée considéré (21, 22 - ou 23),
         - et accorder à tous les ports de sortie (21, 22, 23) un accès général en lecture à tous les groupes (30a, 30b, 30n) de bancs de registres avec un balayage de leurs bancs de registres partant d'un banc de registres de départ sélectionnable et respectant l'ordre du balayage en écriture, selon une périodicité compatible avec le débit binaire maximum du trafic de données sortant par le port de sortie considéré (21, 22 ou 23), et

      • un automate de routage (50) analysant les données binaires de service associées aux datagrammes acheminés par les trafics de données en transit dans le commutateur (1), stockés temporairement dans la mémoire tampon (30), pour extraire des consignes de routage, un profil de diffusion déterminant les ports de sortie de réexpédition puis des consignes de réexpédition à faire exécuter par les circuits de gestion d'émission des ports de sortie (21, 22, 23) identifiés par le profil de diffusion,

et étant **caractérisé en ce que** ledit séquenceur (40) assure la gestion des accès des ports d'entrée et des ports de sortie (21, 22, 23) à la mémoire tampon (30) :

- en découpant le temps mesuré par l'horloge en une suite répétitive de fentes temporelles dans lesquelles sont répartis, de manière invariante, les accès en écriture et en lecture des ports d'entrée et des ports de sortie (21, 22, 23) aux groupes de bancs de registres de la mémoire tampon (30), chaque port d'entrée (21, 22, 23) ayant au moins un accès en écriture et chaque port de sortie (21, 22, 23) un accès en lecture à un banc de registres de la mémoire tampon (30) au cours de la suite répétitive de fentes temporelles, et

- en utilisant un système d'adressage des bancs de registres de la mémoire tampon (30) reprenant dans une première partie de l'adresse individuelle d'un banc de registre au sein de la mémoire tampon, l'adresse du groupe (30a, 30b, 30n) auquel il appartient, cette partie d'adresse identifiant également le port d'entrée (21, 22, 23) possédant l'accès exclusif en écriture dans le banc de registre considéré, et, dans une deuxième partie de l'adresse individuelle d'un banc de registres, sa position relative par rapport aux bancs de registres de son groupe d'appartenance (30a, 30b, 30n) au sein d'un balayage en écriture de ce groupe (30a, 30b, 30n).

2. Commutateur selon la revendication 1, **caractérisé en ce que** la mémoire tampon (30) est organisée en plusieurs modules (A, B, C, D) fonctionnant en parallèle et ayant chacun leurs bancs de registres répartis, entre les différents groupes (30a, 30b, 30n) affectés en écriture aux différents ports d'entrée-sortie (21, 22, 23).

3. Commutateur selon la revendication 2, **caractérisé en ce que** la mémoire tampon (30) est organisée en plusieurs modules (A, B, C, D) de même capacité fonctionnant en parallèle et ayant leurs bancs de registres répartis entre les différents groupes (30a, 30b, 30n) affectés en écriture aux différents ports d'entrée-sortie (21, 22, 23) en suivant une même loi de répartition.

4. Commutateur selon la revendication 2, **caractérisé en ce que** la mémoire tampon (30) est organisée en deux modules (A, B) de mêmes capacités, fonctionnant en parallèle l'un en écriture, l'autre en lecture et échangeant périodiquement les rôles d'écriture et de lecture.

5. Commutateur selon la revendication 2, **caractérisé en ce que** la mémoire tampon (30) est organisée en trois modules (A, B, C) de mêmes capacités, fonctionnant en parallèle en écriture et en lecture, les actions d'écriture et de lecture dans chacun des trois modules étant déphasées entre elles du tiers de leur période.

6. Commutateur selon la revendication 2, **caractérisé en ce que** la mémoire tampon est organisée en quatre modules (A, B, C, D) de mêmes capacités fonctionnant en parallèle en écriture et en lecture, les actions d'écriture et de lecture dans chacun des quatre modules (A, B, C, D) étant déphasées entre elles du quart de leur période.

7. Commutateur selon la revendication 1, **caractérisé en ce que** le séquenceur (40) assure la gestion des accès des ports d'entrée et des ports de sortie (21, 22, 23) à la mémoire tampon (30) en regroupant à plusieurs, les accès de même nature, écriture ou lecture, de la mémoire tampon (30) au cours de la suite répétitive de fentes temporelles de manière à minimiser la fréquence des changements de modes lecture écriture de la mémoire tampon (30).

8. Commutateur selon la revendication 7, **caractérisé en ce qu'**un regroupement d'accès en écriture rassemble des accès dédiés à des ports d'entrée (21, 22, 23) différents et reprend inchangée la deuxième partie d'adresse relative à la position des bancs de registres au sein de leur groupe d'appartenance.

9. Commutateur selon la revendication 1, **caractérisé en ce que,** lorsqu'un port de sortie (21, 22, 23) ne profite pas des accès en lecture dans les bancs de registres de la mémoire tampon (30) qui lui sont alloués par le séquenceur (40), le bus d'adressage de la mémoire tampon conserve la valeur prise au cours du cycle d'adressage précédent.

10. Commutateur selon la revendication 1, **caractérisé en ce que,** lorsqu'un port d'entrée (21, 22, 23) ne profite pas des accès en écriture dans les bancs de registres de la mémoire tampon (30) qui lui sont alloués par le séquenceur (40), les bancs de registres concernés reçoivent, dans la majorité de leurs registres, les données antérieurement présentes sur le bus de données.

11. Commutateur selon la revendication 1, **caractérisé en ce que** sa mémoire tampon (30) possède des registres réservés (102) dans chacun de ses bancs de registres pour au moins un drapeau de présence ou d'absence de datagramme géré par les ports d'entrée (21, 22, 23).

12. Commutateur selon la revendication 11, **caractéri-**

sé en ce que le séquenceur (40) accorde à l'automate de routage (50) des accès à la mémoire tampon centrale (30) pour stocker, dans des bancs de registres inutilisés par les ports d'entrée (21, 22, 23) et pour chaque datagramme en cours de mémorisation, une étiquette d'encapsulation (figure 10) renfermant son profil de diffusion.

13. Commutateur selon la revendication 11, **caractérisé en ce que** le séquenceur (40) accorde à l'automate de routage (50) des accès à la mémoire tampon centrale (30) pour stocker, dans des bancs de registres inutilisés par les ports d'entrée-sortie (21, 22, 23) et pour chaque datagramme en cours de mémorisation, une étiquette d'encapsulation (figure 10) renfermant son profil de diffusion et une indication de sa longueur.

14. Commutateur selon la revendication 1, utilisé dans un réseau où les datagrammes acheminés à la suite sur une même liaison physique, sont séparés par un intervalle de temps minimum, **caractérisé en ce que** le séquenceur (40) affecte à un même port d'entrée (21, 22 ou 23), des accès en écriture à la mémoire tampon (30) avec une périodicité inférieure audit intervalle de temps minimum de séparation, ce qui garantit la présence dans le groupe (30a, 30b, 30n) de bancs de registres de la mémoire tampon (30) affecté en écriture à un port d'entrée (21, 22, 23), d'au moins un banc de registres inutilisé à la séparation entre les données mémorisées deux datagrammes successifs.

15. Commutateur selon la revendication 1, utilisé dans un réseau où les datagrammes acheminés à la suite sur une même liaison physique, sont séparés par un intervalle de temps minimum, **caractérisé en ce que** le séquenceur (40) affecte à un même port d'entrée (21, 22 ou 23), des accès en écriture à la mémoire tampon (30) avec une périodicité inférieure audit intervalle de temps minimum de séparation, ce qui garantit la présence dans le groupe (30a, 30b, 30n) de bancs de registres de la mémoire tampon (30) affecté en écriture à un port d'entrée (21, 22, 23), d'au moins un banc de registres inutilisé à la séparation entre les données mémorisées deux datagrammes successifs, qui est utilisé pour stocker devant un datagramme, une étiquette d'encapsulation (figure 10) renfermant son profil de diffusion extrait par l'automate de routage (50), des informations de service inclues dans le datagramme.

16. Commutateur selon la revendication 1, utilisé dans un réseau où les datagrammes acheminés à la suite sur une même liaison physique, sont séparés par un intervalle de temps minimum, **caractérisé en ce que** le séquenceur (40) affecte à un même port d'entrée (21, 22 ou 23), des accès en écriture à la mémoire tampon (30) avec une périodicité inférieure audit intervalle de temps minimum de séparation, ce qui garantit la présence dans le groupe (30a, 30b, 30n) de bancs de registres de la mémoire tampon (30) affecté en écriture à un port d'entrée (21, 22, 23), d'au moins un banc de registres inutilisé à la séparation entre les données mémorisées deux datagrammes successifs, qui est utilisé pour stocker, devant un datagramme, une étiquette d'encapsulation (figure 10) renfermant son profil de diffusion extrait par l'automate de routage (50), des informations de service inclues dans le datagramme et une information sur sa longueur.

**Claims**

1. Packet switch (1) for information frames of variable sizes with several input ports and several output ports (21, 22, 23) providing for the accesses of incoming and outgoing data traffic travelling along physical transmission links outside the packet switch (1) and transporting information enclosing datagrams consisting of binary message data and of binary service data containing routing directives, each input port, respectively output port (21, 22, 23) monitoring the accesses to the packet switch (1) of incoming data traffic, respectively of outgoing data traffic and each physical link having a maximum throughput prescribed both at the receive end and at the send end, said switch (1) comprising:

at the level of each of its input ports (21, 22, 23):

• a demodulator circuit (220, 221) providing for demodulation allowing the passage of the transmission signals conveyed by the transmission links which are attached to them, to the datagrams which they contain and,
• a circuit for extracting the binary service data contained in the datagrams received,

at the level of each of its output ports (21, 22, 23):

• a modulator circuit (220, 221) providing for modulation allowing the passage of the datagrams to the transmission signals conveyed by the transmission links which are attached to them, and
• a send management circuit (223) executing routing directives relating to the datagrams in transit, received by the switch (1) on its other input/output ports (21, 22, 23), and

at a central level,

• a buffer memory (30) with a set of write- and read-addressable memory register banks for temporarily storing the incoming data traffic entering via the input ports (21, 22, 23), awaiting routing of the datagrams which it contains for redispatching to one or more output ports (21, 22, 23), and with addressing, data and control buses (d, ad) allowing the write- or read-selection of each of its register banks, the number of register banks being at least equal to that of the input ports (21, 22, 23) and sufficient to store the data traffic received on each input port (21, 22, 23) over a duration compatible with a maximum time allotted to the switch (1) for routing the datagrams,

• a sequencer (40) paced by a clock, managing the address, data and read-write control buses (d, ad) of the buffer memory (30), and the accesses of the demodulation (221) and send management (223) circuits to the buffer memory (30), this management consisting in:

- splitting the banks of registers of the buffer memory (30) into as many distinct groups (30a, 30b, 30n) as input ports (21, 22, 23),
- scanning, in write mode, the banks of registers of each group (30a, 30b, 30n) in a cyclic manner according to an invariant scanning law,
- granting each input port (21, 22, 23) exclusive write-access to a single group (30a, 30b, 30n) of banks of registers which is assigned solely to it, according to a periodicity compatible with the maximum throughput of the incoming data traffic entering the switch (1) via the relevant input port (21, 22 or 23),
- and granting all the output ports (21, 22, 23) general read-access to all the groups (30a, 30b, 30n) of banks of registers with a scanning of their banks of registers beginning with a selectable starting bank of registers and complying with the order of write-scanning, according to a periodicity compatible with the maximum binary throughput of the outgoing data traffic leaving via the relevant output port (21, 22, or 23), and

• a routing automaton (50) analyzing the binary service data associated with the datagrams which are transported by the data traffic in transit in the switch (1) and are stored temporarily in the buffer memory (30), so as to extract from the routing directives, a broadcasting profile determining the redispatch output ports then redispatch directives to be executed by the send management circuits of the output ports (21, 22, 23) identified by the broadcasting profile,

and being **characterized in that** said sequencer (40) provides for the management of the accesses of the input ports and of the output ports (21, 22, 23) to the buffer memory (30):

- by chopping the time measured by the clock into a repetitive string of time slots within which are distributed, in an invariant manner, the write- and read-accesses of the input ports and of the output ports (21, 22, 23) to the groups of banks of registers of the buffer memory (30), each input port (21, 22, 23) having at least one write-access and each output port (21, 22, 23) one read-access to a bank of registers of the buffer memory (30) in the course of the repetitive string of time slots, and
- by using a system for addressing the banks of registers of the buffer memory (30) reusing in a first part of the individual address of a register bank within the buffer memory, the address of the group (30a, 30b, 30n) of which it is a member, this address part also identifying the input port (21, 22, 23) possessing the exclusive write-access within the relevant register bank, and, in a second part of the individual address of a bank of registers, its relative position with respect to the banks of registers of its membership group (30a, 30b, 30n) within a write-scan of this group (30a, 30b, 30n).

2. Switch according to Claim 1, **characterized in that** the buffer memory (30) is organized as several modules (A, B, C, D) operating in parallel and each having their banks of registers distributed, between the various groups (30a, 30b, 30n) write-assigned to the various input/output ports (21, 22, 23).

3. Switch according to Claim 2, **characterized in that** the buffer memory (30) is organized as several modules (A, B, C, D) of like capacity operating in parallel and having their banks of registers distributed between the various groups (30a, 30b, 30n) write-assigned to the various input/output ports (21, 22, 23) by following one and the same distribution law.

4. Switch according to Claim 2, **characterized in that** the buffer memory (30) is organized as two modules (A, B) of like capacities, operating in parallel one in write mode, the other in read mode and periodically exchanging the write and read roles.

**5.** Switch according to Claim 2, **characterized in that** the buffer memory (30) is organized as three modules (A, B, C) of like capacities, operating in parallel in write mode and in read mode, the write and read actions in each of the three modules being mutually out of phase by a third of their period.

**6.** Switch according to Claim 2, **characterized in that** the buffer memory is organized as four modules (A, B, C, D) of like capacities operating in parallel in write mode and in read mode, the write and read actions in each of the four modules (A, B, C, D) being mutually out of phase by a quarter of their period.

**7.** Switch according to Claim 1, **characterized in that** the sequencer (40) provides for the management of the accesses of the input ports and of the output ports (21, 22, 23) to the buffer memory (30) by grouping into several, the accesses of like nature, write or read, of the buffer memory (30) in the course of the repetitive string of time slots in such a way as to minimize the frequency of the changes of read write modes of the buffer memory (30).

**8.** Switch according to Claim 7, **characterized in that** a grouping of write-accesses clusters together accesses dedicated to different input ports (21, 22, 23) and reuses unchanged the second address part relating to the position of the banks of registers within their membership group.

**9.** Switch according to Claim 1, **characterized in that,** when an output port (21, 22, 23) does not profit from the read-accesses in the banks of registers of the buffer memory (30) which are allotted to it by the sequencer (40), the addressing bus of the buffer memory keeps the value taken in the course of the previous addressing cycle.

**10.** Switch according to Claim 1, **characterized in that,** when an input port (21, 22, 23) does not profit from the write-accesses in the banks of registers of the buffer memory (30) which are allotted to it by the sequencer (40), the relevant banks of registers receive, in the majority of their registers, the data previously present on the databus.

**11.** Switch according to Claim 1, **characterized in that** its buffer memory (30) possesses reserved registers (102) in each of its banks of registers for at least one flag of presence or of absence of datagram managed by the input ports (21, 22, 23).

**12.** Switch according to Claim 11, **characterized in that** the sequencer (40) grants the routing automaton (50) accesses to the central buffer memory (30) so as to store, in banks of registers unused by the input ports (21, 22, 23) and for each datagram in the course of storage, an encapsulation tag (figure 10) enclosing its broadcasting profile.

**13.** Switch according to Claim 11, **characterized in that** the sequencer (40) grants the routing automaton (50) accesses to the central buffer memory (30) so as to store, in banks of registers unused by the input/output ports (21, 22, 23) and for each datagram in the course of storage, an encapsulation tag (figure 10) enclosing its broadcasting profile and an indication of its length.

**14.** Switch according to Claim 1, used in a network where the datagrams transported one after another on the same physical link, are separated by a minimum time interval, **characterized in that** the sequencer (40) assigns one and the same input port (21, 22 or 23), write-accesses to the buffer memory (30) with a periodicity less than said minimum time interval of separation, thereby guaranteeing the presence in the group (30a, 30b, 30n) of banks of registers of the buffer memory (30) write-assigned to an input port (21, 22, 23), of at least one bank of registers which is unused on separation between the stored data of two successive datagrams.

**15.** Switch according to Claim 1, used in a network where the datagrams transported one after another on the same physical link, are separated by a minimum time interval, **characterized in that** the sequencer (40) assigns one and the same input port (21, 22 or 23), write-accesses to the buffer memory (30) with a periodicity less than said minimum time interval of separation, thereby guaranteeing the presence in the group (30a, 30b, 30n) of banks of registers of the buffer memory (30) write-assigned to an input port (21, 22, 23), of at least one bank of registers which is unused on separation between the stored data of two successive datagrams, which is used to store ahead of a datagram, an encapsulation tag (figure 10) enclosing its broadcasting profile extracted by the routing automaton (50), from the service information included in the datagram.

**16.** Switch according to Claim 1, used in a network where the datagrams transported one after another on the same physical link, are separated by a minimum time interval, **characterized in that** the sequencer (40) assigns one and the same input port (21, 22 or 23), write-accesses to the buffer memory (30) with a periodicity less than said minimum time interval of separation, thereby guaranteeing the presence in the group (30a, 30b, 30n) of banks of registers of the buffer memory (30) write-assigned to an input port (21, 22, 23), of at least one bank of registers which is unused on separation between the stored data of two successive datagrams, which is used to store ahead of a datagram, an encapsulation tag (figure 10) enclosing its broadcasting profile extracted by the routing automaton (50), from the service information included in the datagram and an item of information regarding its length.

## Patentansprüche

1. Paketvermittler (1) für Informationsrahmen variabler Größen, mit mehreren Eingangsports und mehreren Ausgangsports (21, 22, 23), die die Zugänge von eingehenden und ausgehenden Datenverkehren gewährleisten, welche physische Übertragungsverbindungen außerhalb des Paketvermittlers (1) benutzen und Informationen befördern, die Datagramme enthalten, welche aus Mitteilungs-Binärdaten und aus Dienst-Binärdaten bestehen, die Routing-Anweisungen enthalten, wobei jeder Eingangs- bzw. Ausgangsport (21, 22, 23) die Zugänge eines eingehenden Datenverkehrs bzw. eines ausgehenden Datenverkehrs zum Paketvermittler (1) steuert, und jede physische Verbindung einen maximalen Durchsatz hat, der sowohl beim Empfang als auch beim Senden vorgegeben ist, wobei der Vermittler (1) aufweist:

im Bereich jedes seiner Eingangsports (21, 22, 23):

• eine die Demodulation gewährleistende Demodulationsschaltung (220, 221), die den Übergang der von den Übertragungsverbindungen, die an sie angeschlossen sind, übermittelten Signale zu den Datagrammen gewährleistet, die sie enthalten, und
• eine Entnahmeschaltung der Dienst-Binärdaten, die in den empfangenen Datagrammen enthalten sind,

im Bereich jedes seiner Ausgangsports (21, 22, 23):

• eine die Modulation gewährleistende Modulationsschaltung (220, 221), die den Übergang der Datagramme zu den Übertragungssignalen erlaubt, die von den Übertragungsleitungen übermittelt werden, die an sie angeschlossen sind, und
• eine Sendeverwaltungsschaltung (223), die Umlenkanweisungen betreffend die im Transit befindlichen Datagramme ausführt, die vom Vermittler (1) auf seinen anderen Eingangs-Ausgangsports (21, 22, 23) empfangen werden, und

in einem zentralen Bereich:

• einen Pufferspeicher (30) mit einer Gruppe von Speicherregisterbänken, die im Schreib- und im Lesemodus adressiert werden können, um vorübergehend die über die Eingangsports (21, 22, 23) eingehenden Datenverkehre zu speichern, in Erwartung der Umlenkung der Datagramme, die sie enthalten, zur Weiterleitung zu einem oder mehreren Ausgangsports (21, 22, 23), und mit Adressier-, Daten- und Steuer-Bussen (d, ad), die die Auswahl im Schreib- oder Lesemodus jeder seiner Registerbänke erlauben, wobei die Anzahl von Registerbänken mindestens gleich derjenigen der Eingangsports (21, 22, 23) ist und ausreicht, um die an jedem Eingangsport (21, 22, 23) empfangenen Datenverkehre über eine Dauer zu speichern, die mit einer dem Vermittler (1) zum Umlenken der Datagramme zugeteilten maximalen Zeit kompatibel ist,
• eine von einem Taktgeber getaktete Ablaufsteuerung (40), die den Adressen-, Daten- und Lese/Schreib-Steuer-Bus (d, ad) des Pufferspeichers (30) und die Zugänge der Demodulations- (221) und Sendeverwaltungsschaltungen (223) zum Pufferspeicher (30) verwaltet, wobei diese Verwaltung darin besteht:

- die Registerbänke des Pufferspeichers (30) in so viele getrennte Gruppen (30a, 30b, 30n) wie Eingangsports (21, 22, 23) aufzuteilen,
- die Registerbänke jeder Gruppe (30a, 30b, 30n) zyklisch gemäß einem invariablen Abtastgesetz im Schreibmodus abzutasten,
- jedem Eingangsport (21, 22, 23) einen exklusiven Schreibzugang zu einer einzigen Gruppe (30a, 30b, 30n) von Registerbänken zu gewähren, die ihm zu eigen zugewiesen ist, gemäß einer Periodizität, die mit dem maximalen Durchsatz des in den Vermittler (1) über den betreffenden Eingangsport (21, 22 oder 23) eingehenden Datenverkehrs kompatibel ist,
- und allen Ausgangsports (21, 22, 23) einen allgemeinen Lesezugang zu allen Gruppen (30a, 30b, 30n) von Registerbänken zu gewähren, mit einer Abtastung ihrer Registerbänke ausgehend von einer auswählbaren Ausgangsregisterbank und unter Beachtung der Reihenfolge der Schreibabtastung, gemäß einer Periodizität, die mit der maximalen Bitrate des über den betreffenden Ausgangsport (21, 22 oder 23) ausgehenden Datenverkehrs kompatibel ist, und

• einen Routing-Automat (50), der die Dienst-Binärdaten analysiert, die den Datagrammen zugeordnet sind, die von den im Vermittler (1) in Transit befindlichen Datenverkehren befördert werden, die vorübergehend im Pufferspeicher (30) gespeichert sind, um Routing-Anweisungen zu entnehmen, wobei ein Verbreitungsprofil die Weiterleitungs-Ausgangsports und dann Weiterleitungs-Anweisungen bestimmt, die von den Sendeverwaltungsschaltungen der Ausgangsports (21, 22, 23) auszuführen sind, die vom Verbreitungsprofil identifiziert werden,

und **dadurch gekennzeichnet, dass** die Ablaufsteuerung (40) die Verwaltung der Zugänge der Eingangsports und der Ausgangsports (21, 22, 23) zum Pufferspeicher (30) gewährleistet:

- durch Aufteilen der vom Taktgeber gemessenen Zeit in eine repetitive Folge von Zeitschlitzen, in denen die Schreib- und Lesezugänge der Eingangsports und der Ausgangsports (21, 22, 23) zu den Gruppen von Registerbänken des Pufferspeichers (30) in invariabler Weise verteilt sind, wobei im Lauf der repetitiven Folge von Zeitschlitzen jeder Eingangsport (21, 22, 23) mindestens einen Schreibzugang und jeder Ausgangsport (21, 22, 23) einen Lesezugang zu einer Registerbank des Pufferspeichers (30) hat, und
- durch Verwenden eines Adressiersystems der Registerbänke des Pufferspeichers (30), das in einem ersten Teil der individuellen Adresse einer Registerbank innerhalb des Pufferspeichers die Adresse der Gruppe (30a, 30b, 30n) übernimmt, zu der sie gehört, wobei dieser Adressenteil ebenfalls den Eingangsport (21, 22, 23) identifiziert, der den ausschließlichen Schreibzugang zur betreffenden Registerbank besitzt, und in einem zweiten Teil der individuellen Adresse einer Registerbank ihre relative Position bezüglich der Registerbänke ihrer Zugehörigkeitsgruppe (30a, 30b, 30n) innerhalb einer Schreibabtastung dieser Gruppe (30a, 30b, 30n) übernimmt.

2. Vermittler nach Anspruch 1, **dadurch gekennzeichnet, dass** der Pufferspeicher (30) in mehreren Modulen (A, B, C, D) organisiert ist, die parallel arbeiten und deren jeweilige Registerbänke auf die verschiedenen Gruppen (30a, 30b, 30n) aufgeteilt sind, die im Schreibmodus den verschiedenen Eingangs-Ausgangsports (21, 22, 23) zugewiesen sind.

3. Vermittler nach Anspruch 2, **dadurch gekennzeichnet, dass** der Pufferspeicher (30) in mehreren Modulen (A, B, C, D) gleicher Kapazität organisiert ist, die parallel arbeiten und deren Registerbänke auf die verschiedenen Gruppen (30a, 30b, 30n) aufgeteilt sind, die gemäß dem gleichen Verteilungsgesetz im Schreibmodus den verschiedenen Eingangs-Ausgangsports (21, 22, 23) zugewiesen sind.

4. Vermittler nach Anspruch 2, **dadurch gekennzeichnet, dass** der Pufferspeicher (30) in zwei Modulen (A, b) mit gleichen Kapazitäten organisiert ist, die parallel das eine in Schreibmodus und das andere im Lesemodus arbeiten und periodisch die Schreib- und Lesefunktionen tauschen.

5. Vermittler nach Anspruch 2, **dadurch gekennzeichnet, dass** der Pufferspeicher (30) in drei Modulen (A, B, C) mit gleichen Kapazitäten organisiert ist, die parallel im Schreib- und im Lesemodus arbeiten, wobei die Schreib- und Leseaktionen in jedem der drei Module um ein Drittel ihrer Periode zueinander phasenverschoben sind.

6. Vermittler nach Anspruch 2, **dadurch gekennzeichnet, dass** der Pufferspeicher in vier Modulen (A, B, C, D) mit gleichen Kapazitäten organisiert ist, die im Schreib- und Lesemodus parallel arbeiten, wobei die Schreib- und Leseaktionen in jedem der vier Module (A, B, C, D) zueinander um ein Viertel ihrer Periode phasenverschoben sind.

7. Vermittler nach Anspruch 1, **dadurch gekennzeichnet, dass** die Ablaufsteuerung (40) die Verwaltung der Zugänge der Eingangsports und der Ausgangsports (21, 22, 23) zum Pufferspeicher (30) gewährleistet, indem er die Zugänge gleicher Beschaffenheit, Schreib- oder Lesemodus, des Pufferspeichers (30) während der repetitiven Folge von Zeitschlitzen zu mehreren gruppiert, um die Frequenz der Änderungen von Lese-/Schreibmodi des Pufferspeichers (30) zu minimieren.

8. Vermittler nach Anspruch 7, **dadurch gekennzeichnet, dass** eine Gruppierung von Schreibzugängen verschiedenen Eingangsports (21, 22, 23) dedizierte Zugänge zusammenfasst und den zweiten Adressenteil bezüglich der Position der Registerbänke innerhalb ihrer Zugehörigkeitsgruppe unverändert übernimmt.

9. Vermittler nach Anspruch 1, **dadurch gekennzeichnet, dass**, wenn ein Ausgangsport (21, 22, 23) nicht die Lesezugänge zu den Registerbänken des Pufferspeichers (30) nutzt, die ihm von der Ablaufsteuerung (40) zugeteilt werden, der Adressierbus des Pufferspeichers den während des vorhergehenden Adressierzyklus angenommenen Wert beibehält.

10. Vermittler nach Anspruch 1, **dadurch gekennzeichnet, dass**, wenn ein Eingangsport (21, 22, 23) nicht die Schreibzugänge zu den Registerbänken des Pufferspeichers (30) nutzt, die ihm von der Ablaufsteuerung (40) zugeteilt werden, die betroffenen Registerbänke in den meisten ihrer Register die Daten empfangen, die vorher im Datenbus vorhanden waren.

11. Vermittler nach Anspruch 1, **dadurch gekennzeichnet, dass** sein Pufferspeicher (30) in jeder seiner Registerbänke für mindestens ein von den Eingangsports (21, 22, 23) verwaltetes Datagramm-Anwesenheits- oder Abwesenheits-Flag reservierte Register (102) besitzt.

12. Vermittler nach Anspruch 11, **dadurch gekennzeichnet, dass** die Ablaufsteuerung (40) dem Routing-Automat (50) Zugänge zum zentralen Pufferspeicher (30) gewährt, um in von den Eingangsports (21, 22, 23) ungenutzten Registerbänken und für jedes im Speichervorgang befindliche Datagramm einen Verkapselungskennsatz zu speichern (Figur 10), der sein Verbreitungsprofil enthält.

13. Vermittler nach Anspruch 11, **dadurch gekennzeichnet, dass** die Ablaufsteuerung (40) dem Routing-Automat (50) Zugänge zum zentralen Pufferspeicher (30) gewährt, um in von den Eingangs-Ausgangsports (21, 22, 23) ungenutzten Registerbänken und für jedes im Speichervorgang befindliche Datagramm einen Verkapselungskennsatz zu speichern (Figur 10), der sein Verbreitungsprofil und eine Angabe seiner Länge enthält.

14. Vermittler nach Anspruch 1, der in einem Netzwerk verwendet wird, in dem die nacheinander auf der gleichen physischen Verbindung beförderten Datagramme durch ein Mindestzeitintervall getrennt sind, **dadurch gekennzeichnet, dass** die Ablaufsteuerung (40) dem gleichen Eingangsport (21, 22 oder 23) Schreibzugänge zum Pufferspeicher (30) mit einer Periodizität zuweist, die geringer ist als das Mindestzeitintervall der Trennung, was das Vorhandensein in der Gruppe (30a, 30b, 30n) von Registerbänken des Pufferspeichers (30), die im Schreibmodus einem Eingangsport (21, 22, 23) zugewiesen ist, von mindestens einer Registerbank garantiert, die bei der Trennung zwischen den gespeicherten Daten von zwei aufeinanderfolgenden Datagrammen nicht genutzt wird.

15. Vermittler nach Anspruch 1, der in einem Netzwerk verwendet wird, in dem die nacheinander auf der gleichen physischen Verbindung beförderten Datagramme durch ein Mindestzeitintervall getrennt sind, **dadurch gekennzeichnet, dass** die Ablaufsteuerung (40) dem gleichen Eingangsport (21, 22 oder 23) Schreibzugänge zum Pufferspeicher (30) mit einer Periodizität zuweist, die geringer ist als das Mindestzeitintervall der Trennung, was das Vorhandensein in der Gruppe (30a, 30b, 30n) von Registerbänken des Pufferspeichers (30), die im Schreibmodus einem Eingangsport (21, 22, 23) zugewiesen ist, von mindestens einer Registerbank garantiert, die bei der Trennung zwischen den gespeicherten Daten von zwei aufeinanderfolgenden Datagrammen nicht genutzt wird, die genutzt wird, um vor einem Datagramm einen Verkapselungskennsatz (Figur 10) zu speichern, der sein vom Routing-Automat (50) entnommenes Verbreitungsprofil der im Datagramm enthaltenen Dienstinformationen umfasst.

16. Vermittler nach Anspruch 1, der in einem Netzwerk verwendet wird, in dem die nacheinander auf der gleichen physischen Verbindung beförderten Datagramme durch ein Mindestzeitintervall getrennt sind, **dadurch gekennzeichnet, dass** die Ablaufsteuerung (40) dem gleichen Eingangsport (21, 22 oder 23) Schreibzugänge zum Pufferspeicher (30) mit einer Periodizität zuteilt, die geringer ist als das Mindestzeitintervall der Trennung, was das Vorhandensein in der Gruppe (30a, 30b, 30n) von Registerbänken des Pufferspeichers (30), die im Schreibmodus einem Eingangsport (21, 22, 23) zugewiesen ist, von mindestens einer Registerbank garantiert, die bei der Trennung zwischen den gespeicherten Daten von zwei aufeinanderfolgenden Datagrammen nicht genutzt wird, die genutzt wird, um vor einem Datagramm einen Verkapselungskennsatz (Figur 10) zu speichern, der sein vom Routing-Automat (50) entnommenes Verbreitungsprofil der im Datagramm enthaltene Dienstinformationen und eine Information über seine Länge umfasst.

FIG.1

# FIG.2

221      222     → 22

| DÉMODULATEUR | MAC |
|---|---|
| MODULATEUR | |

vr

ve

220

GESTIONNAIRE
D'ÉMISSION

at

223

PILE    224

re

# FIG.3

FIG.4

| FENTES TEMPORELLES | ACCES MEMOIRE |
|---|---|
| 0 | W0 - 1 |
| 1 | W1 - 1 |
| 2 | W2 - 1 |
| 3 | W3 - 1 |
| 4 | W4 - 1 |
| 5 | W5 - 1 |
| 6 | W6 - 1 |
| 7 | |
| 8 | R0 – X0x0 |
| 9 | R1 – X1x1 |
| 10 | R2 – X2x2 |
| 11 | R3 – X3x3 |
| 12 | R4 – X4x4 |
| 13 | R5 – X5x5 |
| 14 | R6 – X6x6 |
| 15 | |
| 16 | W0 - 2 |
| 17 | W1 - 2 |
| 18 | W2 - 2 |
| 19 | W3 - 2 |
| 20 | W4 - 2 |
| 21 | W5 - 2 |
| 22 | W6 - 2 |
| 23 | |
| 24 | R0 – X0 (x0+1) |
| 25 | R1 – X1 (x1+1) |
| 26 | R2 – X2 (x2+1) |
| 27 | R3 – X3 (x3+1) |
| 28 | R4 – X4 (x4+1) |
| 29 | R5 – X5 (x5+1) |
| 30 | R6 – X6 (x6+1) |
| 31 | |

TS  TS

# FIG.5

| FENTES TEMPORELLES | ACCES MODULE A | ACCES MODULE B |
|---|---|---|
| 0 | W0 - 1 | R0 - X0x0 |
| 1 | W1 - 1 | R1 - X1x1 |
| 2 | W2 - 1 | R2 - X2x2 |
| 3 | W3 - 1 | R3 - X3x3 |
| 4 | W4 - 1 | R4 - X4x4 |
| 5 | W5 - 1 | R5 - X5x5 |
| 6 | W6 - 1 | R6 - X6x6 |
| 7 | | |
| 8 | R0 - X0 (x0 +1) | W0 - 2 |
| 9 | R1 - X1 (x1 +1) | W1 - 2 |
| 10 | R2 - X2 (x2 +1) | W2 - 2 |
| 11 | R3 - X3 (x3 +1) | W3 - 2 |
| 12 | R4 - X4 (x4 +1) | W4 - 2 |
| 13 | R5 - X5 (x5 +1) | W5 - 2 |
| 14 | R6 - X6 (x6 +1) | W6 - 2 |
| 15 | | |
| 16 | W0 - 3 | R0 - X0 (x0 +2) |
| 17 | W1 - 3 | R1 - X1 (x1 +2) |
| 18 | W2 - 3 | R2 - X2 (x2 +2) |
| 19 | W3 - 3 | R3 - X3 (x3 +2) |
| 20 | W4 - 3 | R4 - X4 (x4 +2) |
| 21 | W5 - 3 | R5 - X5 (x5 +2) |
| 22 | W6 - 3 | R6 - X6 (x6 +2) |
| 23 | | |
| 24 | R0 - X0 (x0+3) | W0 - 4 |
| 25 | R1 - X1 (x1+3) | W1 - 4 |
| 26 | R2 - X2 (x2+3) | W2 - 4 |
| 27 | R3 - X3 (x3+3) | W3 - 4 |
| 28 | R4 - X4 (x4+3) | W4 - 4 |
| 29 | R5 - X5 (x5+3) | W5 - 4 |
| 30 | R6 - X6 (x6+3) | W6 - 4 |
| 31 | | |

TS

# FIG.6

**FIG.7**

| FENTES TEMPORELLES | ACCES MODULE A | ACCES MODULE B | ACCES MODULE C | |
|---|---|---|---|---|
| -1 |  | R7 | W15 |  |
| 0 | W0 | R8 | W16 | ↑ |
| 1 | W1 | R9 | W17 | |
| 2 | W2 | R10 | W18 | |
| 3 | W3 | R11 | W19 | |
| 4 | W4 | R12 | W20 | |
| 5 | W5 | R13 | W21 | |
| 6 | W6 | R14 | W22 | |
| 7 | W7 | R15 |  | TS |
| 8 | W8 | R16 | R0 | |
| 9 | W9 | R17 | R1 | |
| 10 | W10 | R18 | R2 | |
| 11 | W11 | R19 | R3 | |
| 12 | W12 | R20 | R4 | |
| 13 | W13 | R21 | R5 | |
| 14 | W14 | R22 | R6 | |
| 15 | W15 |  | R7 | ↓ |
| 16 | W16 | W0 | R8 | |
| 17 | W17 | W1 | R9 | |
| 18 | W18 | W2 | R10 | |
| 19 | W19 | W3 | R11 | |
| 20 | W20 | W4 | R12 | |
| 21 | W21 | W5 | R13 | |
| 22 | W22 | W6 | R14 | |
| 23 |  | W7 | R15 | |
| 24 | R0 | W8 | R16 | |
| 25 | R1 | W9 | R17 | |
| 26 | R2 | W10 | R18 | |
| 27 | R3 | W11 | R19 | |
| 28 | R4 | W12 | R20 | |
| 29 | R5 | W13 | R21 | |
| 30 | R6 | W14 | R22 | |
| 31 | R7 | W15 |  | |
| 32 | R8 | W16 | W0 | |
| 33 | R9 | W17 | W1 | |
| 34 | R10 | W18 | W2 | |
| 35 | R11 | W19 | W3 | |
| 36 | R12 | W20 | W4 | |
| 37 | R13 | W21 | W5 | |
| 38 | R14 | W22 | W6 | |
| 39 | R15 |  | W7 | |
| 40 | R16 | R0 | W8 | |
| 41 | R17 | R1 | W9 | |
| 42 | R18 | R2 | W10 | |
| 43 | R19 | R3 | W11 | |
| 44 | R20 | R4 | W12 | |
| 45 | R21 | R5 | W13 | |
| 46 | R22 | R6 | W14 | |
| 47 |  | R7 | W15 | |
| 48 | W0 | R8 | W16 | |
| 49 | W1 | R9 | W17 | |
| 50 | W2 | R10 | W18 | |
| 51 | W3 | R11 | W19 | |
| 52 | W4 | R12 | W20 | |
| 53 | W5 | R13 | W21 | |
| 54 | W6 | R14 | W22 | |
| 55 | W7 | R15 |  | |
| 56 | W8 | R16 | R0 | |
| 57 | W9 | R17 | R1 | |
| 58 | W10 | R18 | R2 | |
| 59 | W11 | R19 | R3 | |
| 60 | W12 | R20 | R4 | |
| 61 | W13 | R21 | R5 | |
| 62 | W14 | R22 | R6 | |
| 63 | W15 |  | R7 | |
| 64 | W16 | W0 | R8 | |
| 65 | W17 | W1 | R9 | |

| FENTES TEMPORELLES | ACCES MODULE A | ACCES MODULE B | ACCES MODULE C | ACCES MODULE D |
|---|---|---|---|---|
| 0 | W0 | R16 | R0 | W16 |
| 1 | W1 | R17 | R1 | W17 |
| 2 | W2 | R18 | R2 | W18 |
| 3 | W3 | R29 | R3 | W19 |
| 4 | W4 | R20 | R4 | W20 |
| 5 | W5 | R21 | R5 | W21 |
| 6 | W6 | R22 | R6 | W22 |
| 7 | W7 | R23 | R7 | W23 |
| 8 | W8 | R24 | R8 | W24 |
| 9 | W9 | R25 | R9 | W25 |
| 10 | W10 | R26 | R10 | W26 |
| 11 | W11 | R27 | R11 | W27 |
| 12 | W12 | R28 | R12 | W28 |
| 13 | W13 | R29 | R13 | W29 |
| 14 | W14 | R30 | R14 | W30 |
| 15 | W15 | | R15 | |
| 16 | W16 | W0 | R16 | R0 |
| 17 | W17 | W1 | R17 | R1 |
| 18 | W18 | W2 | R18 | R2 |
| 19 | W19 | W3 | R19 | R3 |
| 20 | W20 | W4 | R20 | R4 |
| 21 | W21 | W5 | R21 | R5 |
| 22 | W22 | W6 | R22 | R6 |
| 23 | W23 | W7 | R23 | R7 |
| 24 | W24 | W8 | R24 | R8 |
| 25 | W25 | W9 | R25 | R9 |
| 26 | W26 | W10 | R26 | R10 |
| 27 | W27 | W11 | R27 | R11 |
| 28 | W28 | W12 | R28 | R12 |
| 29 | W29 | W13 | R29 | R13 |
| 30 | W30 | W14 | R30 | R14 |
| 31 | | W15 | | R15 |
| 32 | R0 | W16 | W0 | R16 |
| 33 | R1 | W17 | W1 | R17 |
| 34 | R2 | W18 | W2 | R18 |
| 35 | R3 | W19 | W3 | R19 |
| 36 | R4 | W20 | W4 | R20 |
| 37 | R5 | W21 | W5 | R21 |
| 38 | R6 | W22 | W6 | R22 |
| 39 | R7 | W23 | W7 | R23 |
| 40 | R8 | W24 | W8 | R24 |
| 41 | R9 | W25 | W9 | R25 |
| 42 | R10 | W26 | W10 | R26 |
| 43 | R11 | W27 | W11 | R27 |
| 44 | R12 | W28 | W12 | R28 |
| 45 | R13 | W29 | W13 | R29 |
| 46 | R14 | W30 | W14 | R30 |
| 47 | R15 | | W15 | |
| 48 | R16 | R0 | W16 | W0 |
| 49 | R17 | R1 | W17 | W1 |
| 50 | R18 | R2 | W18 | W2 |
| 51 | R19 | R3 | W19 | W3 |
| 52 | R20 | R4 | W20 | W4 |
| 53 | R21 | R5 | W21 | W5 |
| 54 | R22 | R6 | W22 | W6 |
| 55 | R23 | R7 | W23 | W7 |
| 56 | R24 | R8 | W24 | W8 |
| 57 | R25 | R9 | W25 | W9 |
| 58 | R26 | R10 | W26 | W10 |
| 59 | R27 | R11 | W27 | W11 |
| 60 | R28 | R12 | W28 | W12 |
| 61 | R29 | R13 | W29 | W13 |
| 62 | R30 | R14 | W30 | W14 |
| 63 | | R15 | | W15 |
| 64 | W0 | R16 | R0 | W16 |
| 65 | W1 | R17 | R1 | W17 |

TS

FIG.8

31

DATA

35 34 33 32 31 30 29 28 27 26 25 24 23 22 21 20 19 18 17 16 15 14 13 12 11 10 9 8 7 6 5 4 3 2 1 0

| 1 1 | S1 S0 | DONNÉES |

102    101                100

No DATA

35 34 33 32 31 30 29 28 27 26 25 24 23 22 21 20 19 18 17 16 15 14 13 12 11 10 9 8 7 6 5 4 3 2 1 0

| 0 0 | 0 0 | 0 0 | |

102    101

**FIG.9**

35 34 33 32 31 30 29 28 27 26 25 24 23 22 21 20 19 18 17 16 15 14 13 12 11 10 9 8 7 6 5 4 3 2 1 0

| LONGUEUR (11 BITS) | PROFIL DE DIFFUSION (25 BITS) |

201                       200

**FIG.10**

EP 1 374 465 B1

**EP 1 374 465 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0299473 A
- FR 2723222